# EUROPÄISCHE PATENTSCHRIFT

(11) **EP 3 661 345 B1**
(45) Veröffentlichungstag und Bekanntmachung des Hinweises auf die Patenterteilung: **09.03.2022**
(21) Anmeldenummer: 18759038.5
(22) Anmeldetag: 31.07.2018
(51) Int. Cl.: A01B 51/02

(54) **SELBSTFAHRENDE ARBEITSMASCHINE**
SELF-PROPELLED MACHINE
ENGIN DE TRAVAIL AUTOMOTEUR

(30) Priorität: 01.08.2017 DE 102017007265; 19.07.2018 DE 202018104162 U
(43) Veröffentlichungstag der Anmeldung: 10.06.2020
(73) Patentinhaber: Kalverkamp Innovation GmbH, 49597 Rieste (DE)
(72) Erfinder: KALVERKAMP, Felix, 49434 Vörden (DE); KALVERKAMP, Klemens, 49401 Damme (DE)
(74) Vertreter: Bossmeyer, Jörg Peter
(86) Internationale Anmeldenummer: PCT/EP2018/070798
(87) Internationale Veröffentlichungsnummer: WO 2019/025466

(56) Entgegenhaltungen:
- EP-A1- 0 793 411
- EP-B1- 0 793 411
- CN-U- 203 851 446
- GB-A- 1 578 857

## Beschreibung

Die Erfindung ist auf eine selbstfahrende Arbeitsmaschine gerichtet, die in der Landwirtschaft für variierbare Bearbeitungstechniken einsetzbar ist.

Derartige multifunktionale Arbeitsmaschinen für die Landwirtschaft sind seit langem bekannt, wobei jeweilige Trägerfahrzeuge für unterschiedliche Einsatzzwecke umgerüstet werden können. In DE 21 33 779 wird ein Tragfahrzeug zur Aufnahme eines Erntebergungsgerätes vorgeschlagen, wobei dieses Grundfahrzeug prinzipiell auch für weitere Anwendungsfälle eingesetzt werden kann. Damit wird ein Konzept begründet, bei dem ein brückenartiges Bauteil die jeweiligen Ansatzgeräte über Kopplungselemente aufnehmen kann. Diese ein "Brücken-Konzept" realisierende Konstruktion nach Art eines Gantrie-Systems ist auch bei Lösungen gemäß US 5,092,422, US 4,164,985, DE 39 11 524, WO 01/23241, WO 2011/114016 und CN 203851446 vorgesehen.

Weitere bekannte Konstruktionen sind auf im Wesentlichen einstückige Träger gerichtet, wobei das Fahrgestell als ein zentraler Rahmen vorgesehen ist. Derartige Lösungen werden in EP 0 331 070, DE 24 43 915, US 3,825,087 und WO 90/07866 gezeigt. Auch in EP 0 793 411 ist ein System mit einem umrüstbaren Fahrgestell bzw. einem Doppel-T-förmigen Rahmenaufbau vorgeschlagen. Ein länglicher zentraler Abschnitt dieser Tragstruktur ist dabei endseitig mit jeweils einem die Antriebsräder tragenden Abschnitt versehen. Diese seitlichen Abschnitte weisen obere Flächen auf, die im Wesentlichen koplanar mit der oberen Fläche des zentralen Abschnitts sind. Auch GB 1578857 A weist ein dreiteiliges System mit zentralem Längsrahmen und endseitigen Fahrgestellen mit Diagonalstreben auf.

In Ansehung dieser als Gantrie-Systeme bekannten Konstruktionen der Landtechnik wurde festgestellt, dass bei einer Bestückung der jeweiligen Tragstruktur mit variierenden Aggregaten bei einer in der Landtechnik bevorzugten Reihenbearbeitung von Ackerflächen nachteiliger Umrüstaufwand entsteht und ein Straßentransport der Systeme mit aufmontierten Aggregaten nur beschränkt durchführbar ist.

Die Aufgabe des erfindungsgemäßen Konzepts besteht darin, eine multifunktionale landwirtschaftliche Arbeitsmaschine zu schaffen, bei der eine optimale Struktur mit variierbaren Anbaubereichen eine universelle Kupplung von Anbaugeräten ermöglicht, dabei die Antriebs- und Steueraggregate in das Gesamtsystem integrierbar sind und damit sowohl für landwirtschaftliche Einsatzfälle als auch für jeweilige Phasen des Straßentransports die Bedingungen zur vollautonomen Anwendung verbessert sind.

Die erfindungsgemäße Ausführung der selbstfahrenden Arbeitsmaschine für die Landtechnik geht davon aus, dass eine mit den jeweiligen endseitigen Bodenabstützungen - die vorzugsweise in Form von paarweise gegenüberliegend angeordneten Radpaaren oder Fahrraupen vorgesehen sind - in der Straßenausrichtung positionierbare Tragstruktur nunmehr eine sich in Längsrichtung des Systems im Wesentlichen zwischen diesen Bodenabstützungen erstreckende vertikale Längsmittelebene definiert.

In Ausrichtung zu dieser - als erfinderische Basis einer neuen Bauteilkombination zu bewertenden - Lage einer an sich bekannten vertikalen Längsmittelebene wird die Tragstruktur konzeptionell weiterentwickelt und optimiert. Diese bildet nunmehr einen mit zumindest einem asymmetrisch zur Längsmittelebene positionierbaren Basisträger versehenen Funktionsrahmen aus. Dabei ist vorgesehen, dass der Basisträger - ausgehend von einem in normierten Größen vorgegebenen Längenmaß der möglichen Fahrbreite(n) - mit dem zumindest einen Seitenträger ausschließlich in einem jeweiligen äußeren Teilungsdrittel dieses Längenmaßes der Fahrbreite verbunden ist. Damit wird eine in Bezug auf die Längsmittelebene asymmetrische Anordnung des Basisträgers als funktionale Grundkonstruktion definiert.

Mit diesem im Wesentlichen bodenparallel ausrichtbaren und in Draufsicht E-, L- oder U-förmig ausführbaren Funktionsrahmen wird eine in Ansehung des Standes der Technik überraschend effektiv einsetzbare Basisstruktur vorgegeben. Diese ermöglicht eine auch in Ansehung der Vielzahl von Konstruktionen bekannter Gantrie-Systeme überraschende Verbesserung der Einsatzvielfalt. Der asymmetrische Funktionsrahmen ist einfach an komplexe landwirtschaftliche Aggregateanwendungen anpassbar. Dabei ist sowohl im Feldeinsatz als auch bei Straßenfahrten nur ein geringer Umrüstaufwand erforderlich. Diese Basisstruktur des Funktionsrahmens kann vor allem im Zusammenwirken mit GPS-gesteuerten automatischen Maschinenkonzepten und Aggregaten als ein anwenderspezifischer Grundträger optimal ausgerüstet und danach mit weitgehend beliebigen Anbaugeräten universell eingesetzt werden. Dabei sind variable Konzepte von vollautonomen Arbeitsmaschinen realisierbar.

Ausgehend von den bisher üblichen Ausführungen eines "vertikalen unterfahrbaren U-Rahmens" bei Gantrie-Systemen des Standes der Technik wird mit dem erfindungsgemäßen asymmetrischen Querträger-Seitenträger-Konzept ein wesentlich verbesserter Anwendungsumfang für Feld- und Straßeneinsätze durch ein kompaktes und effektiv ausgesteiftes Gesamtkonzept im Bereich der Stütz- und Kupplungsteile erreicht. Nunmehr ist eine Straßenfahrt der asymmetrischen U-Rahmen-Arbeitsmaschine auch mit angekoppelten Aggregaten möglich. Dabei können einfachere Einstellungen der Antriebsräder und/oder -raupen die Bedienung wesentlich vereinfachen. Der asymmetrische Funktionsrahmen weist eine verbesserte Stabilität in jedem Anwendungsfall auf. Dabei kann mit geringem Aufwand eine optimierte Lastverteilung durch effektive Ausnutzung eines erfindungsgemäß definierten Aufnahmeraumes zwischen den Trägern erreicht werden.

In der Gebrauchslage auf dem Ackerboden - insbesondere für variierende Anbaugeräte beim Ackern, Säen, Düngen, Spritzen und Ernten - kann der asymmetrische Funktionsrahmen eine Vielzahl von Anbaupositionen vorgeben. Dabei wird sowohl ein zentraler Aufnahmeraum zwischen den Seitenträgern als auch ein entsprechender Freiraum oberhalb und unterhalb des Basisträgers genutzt. Dieser damit mehrgliedrig einsetzbare Funktionsrahmen ermöglicht auch die gleichzeitige Aufnahme mehrerer Anbaugeräte, so dass variable Bearbeitungsabläufe schneller auszuführen sind.

Eine vorteilhafte Ausführung des Funktionsrahmens mit asymmetrischem Basisträger sieht vor, dass die verkehrstechnisch zulässige Fahrbreite in Straßenausrichtung des Systems als Bezugsgröße genutzt wird. Dabei kann der Basisträger ausgehend von einem insbesondere maximalen Längenmaß der Fahrbreite so platziert werden, dass in einem jeweiligen äußeren Teilungsdrittel dieses Längenmaßes der Basisträger mit dem zumindest einen Seitenträger verbunden ist. Dabei ist vorgesehen, dass - ausgehend von auch variabel vorgebbaren Fahrbreiten des Systems - der Basisträger an beiden Seitenträgern jeweils zu einer zur Längsmittelebene orthogonalen Quermittelebene spiegelbildliche Verbindungsbereiche für die jeweiligen Bodenabstützungen definiert.

Vorgesehen ist auch, dass der in Straßenausrichtung des Funktionsrahmens im Wesentlichen parallel zur Fahrtrichtung verlaufende Basisträger mit den Seitenträgern eine Verbindungsposition bildet, in der der asymmetrische Basisträger mit seinem äußeren Randbereich eine seitliche Bezugsfläche für die einzuhaltende Fahrbreite definiert. Damit ist der Basisträger - in Bezug auf die erfindungswesentliche Längsmittelebene - bis an einen äußeren Rand des jeweiligen Teilungsdrittels verschoben.

Die konstruktive Umsetzung sieht auch vor, dass der Funktionsrahmen eine in Draufsicht im Wesentlichen L-förmige Tragstruktur mit dem zumindest einen Seitenträger bilden kann. Davon ausgehend ist vorgesehen, dass der Funktionsrahmen an seinem Basisträger auch mit mehreren, als Seitenträger nutzbaren Baugruppen ausgerüstet werden kann. Daraus resultiert eine vorteilhafte Ausführung des Gesamtsystems, wobei ein in Draufsicht im Wesentlichen E- oder U-förmiger Funktionsrahmen gebildet werden kann.

Die vorteilhaft nutzbare U-Gestaltung ist darauf abgestellt, dass an den beiden Endbereichen des Basisträgers jeweils nur einer der Seitenträger angesetzt ist. Daraus ergibt sich, dass die beiden äußeren Träger dieser U-Form gemeinsam mit dem Basisträger einen zentralen Aufnahmeraum zumindest bereichsweise umgrenzen.

Dieses Konzept mit einem in sämtlichen Benutzungssituationen stabilen Rahmenaufbau kann dabei mit variablen Längen des Basisträgers und variablen Längenmaßen des Seitenträgers kombiniert werden. Damit kann eine zumindest bereichsweise zweiseitig umfasste Grundfläche des Aufnahmeraumes so definiert werden, dass ausgehend von dieser Grundfläche ein nutzbares Aufnahmevolumen ableitbar ist und damit der zentrale Aufnahmeraum des Funktionsrahmens weitgehend variabel gestaltet werden kann. Denkbar ist dabei auch, dass im Bereich des Funktionsrahmens mehrere, im Flächen- und Höhenmaß variabel zu bemessende Aufnahmeräume definiert werden. Diesen sind je nach Anwendungsfall die jeweiligen Anbaugeräte positionsgenau zugeordnet.

Ausgehend von dieser Drei-Seiten-Tragstruktur als Kern des Systems ist vorgesehen, dass der Funktionsrahmen im Bereich des zentralen Aufnahmeraumes zumindest drei Funktionsabschnitte zur Kopplung von Anbaugeräten in einer jeweiligen Ebene an den Trägern aufweisen kann. Es versteht sich, dass dabei auch nur einzelne der Funktionsabschnitte nutzbar sind oder das System mehr als die drei zur Kopplung dienende Ansatzzonen definiert.

Die weitere Anpassung des Funktionsrahmens an die praxisrelevanten Bedingungen sieht vor, dass der Basisträger und/oder die Seitenträger in ihrer horizontalen Lage und/oder ihrer vertikalen Höhe oberhalb einer Straßen- oder Feldarbeitsfläche einstellbar ausführbar sind. Dabei ist ebenso denkbar, dass die - insbesondere mit Stützrädern versehenen - Bodenabstützungen verstellbar mit dem Funktionsrahmen verbunden werden.

Ausgehend von dem zur Längsmittelachse des Systems spiegelbildlichen Aufbau der bodenseitigen Stützen ist vorgesehen, dass an den jeweiligen Seitenträgern jeweils zumindest eine Bodenabstützung vorgesehen ist. Diese Bodenabstützungen sind mit einer vorteilhaften Schwenkkonstruktion versehen, mit der zusätzlich zur Steuerung der jeweiligen Ausrichtung auch die Bedingungen bei der Installation von Anbaugeräten verbessert werden. Dabei ist vorgesehen, dass in zumindest einer verlagerten Bedienstellung der Bodenabstützungen ein zusätzlicher Freiraum als Zugang in den einseitig offenen zentralen Aufnahmeraum hergestellt werden kann.

Die Schwenkkonstruktion der Bodenabstützungen ist dazu so ausgelegt, dass sämtliche Komponenten im Bereich ihrer Halterung am Funktionsrahmen eine Lage außerhalb des Aufnahmeraumes einnehmen können. In zweckmäßiger Ausführung sieht die Konstruktion vor, dass an jedem der Seitenträger zwei paarweise zusammenwirkende Stützräder oder Bandlaufwerke als die jeweils verlagerbare Bodenabstützung vorgesehen sind.

Eine weitere Ausgestaltung sieht vor, dass im Bereich des Funktionsrahmens zumindest einer der Seitenträger in Relation zum Basisträger verlagerbar mit diesem verbunden sein kann. Denkbar ist dabei auch eine Ausführung des Funktionsrahmens, der im Bereich des Basisträgers und/oder zumindest eines der Seitenträger eine teleskopisch ausgebildete Stützkonstruktion aufweist. Es versteht sich, dass jeweilige als Verbrennungsmotor, Hydraulikmotor oder Elektromotor vorgesehene Antriebsaggregate des Systems wahlweise im Bereich des Basisträgers und/oder eines der Seitenträger angeordnet werden können.

Die multifunktionale Ausbildung des stabilisierbaren Anbausystems sieht vor, dass zumindest eines der in Koppelstellung verbrachten Anbaugeräte am Funktionsrahmen in eine strukturaussteifende Verbindungslage gebracht werden kann. Diese strukturaussteifende Bauteilkombination sieht vor, dass bei jeweiliger Nutzung des Systems sowohl in Arbeitsausrichtung als auch in Straßenausrichtung eine optimale Lastverteilung am Funktionsrahmen erreicht werden kann. Damit sind insbesondere jeweilige, in einer auf dem Acker erzeugten Fahrspur auftretende Flächenlasten optimal verteilbar. Die optimale Lastverteilung ist auch so möglich, dass während einer Straßenfahrt vorzugsweise die Kippneigung des Systems minimiert werden kann.

Es hat sich gezeigt, dass für eine multifunktionale Nutzung des Systems neben dem an sich zur Kopplung genutzten Basisträger auch die jeweiligen Seitenträger zumindest eine Anbauposition für zumindest eines der landwirtschaftlichen Anbaugeräte vorgeben können. Dabei ist die Konstruktion des Basisträgers so ausgelegt, dass dieser in seiner quer zu dessen Längsrichtung definierbaren Umfangsrichtung auch allseitig mit jeweiligen Verbindungsbereichen für zumindest eines der variabel anwendbaren Anbaugeräte versehen sein kann. Im Bereich der Seitenträger ist vorgesehen, dass an deren jeweiligen Innen- und/oder Außenseiten zumindest eines der Anbaugeräte gekoppelt werden kann.

Eine vorteilhafte Ausführung hinsichtlich der Stabilität und Lastverteilung des Systems ist darauf gerichtet, dass die Anbaugeräte auch eine dem jeweiligen Träger des Funktionsrahmens mehrseitig zugeordnete Verbindungslage aufweisen können. Daraus resultiert, dass die Anbaugeräte den jeweiligen Träger in dessen Umfangsrichtung zumindest bereichsweise umschließen können.

Mit der U-förmigen Gestaltung des Funktionsrahmens wird erreicht, dass dieser im Bereich des Basisträgers und/oder beider Seitenträger gleichzeitig mehrere, auch auf unterschiedliche Arbeitswirkungen gerichtete Anbaugeräte aufnehmen kann. Dabei ist vorgesehen, dass im Bereich des Funktionsrahmens jeweilige, für einen weitgehend selbsttätigen An- und Abbau der Anbaugeräte aktivierbare Fixierelemente vorgesehen sind.

Das Antriebskonzept für die erfindungsgemäße Arbeitsmaschine sieht vor, dass auch eine oder mehrere Motor-Getriebe-Einheiten mit mehreren Antriebsverbindungen in das System integrierbar sind. Dabei ist vorgesehen, dass die jeweiligen variabel positionierbaren Anbaugeräte einzeln oder gemeinsam bedienbar sind.

Ein vorteilhafter Anwendungsfall sieht vor, dass das insbesondere über Bandlaufwerke bodenseitig abgestützte System mit dem asymmetrischen Funktionsrahmen auch mittels gekoppelter Anbaugeräte in einer kompakten Straßenfahrlage positioniert werden kann. Dabei wird mit dem Funktionsrahmen ein Fahrgestell definiert, bei dem die Bandlaufwerke im Bereich zumindest einer der beiden seitlichen Bezugsflächen überstandsfrei ausrichtbar sind und damit eine optimal zu steuernde Straßenfahrlage erreicht wird.

Die konstruktive Umsetzung des asymmetrischen Funktionsrahmens sieht im Bereich der E-, U- bzw. L-Struktur vor, dass die hier wirksamen Seitenträger jeweils vier Raupenketten, vier Bandlaufwerke, vier Stützräder o. dgl. Bodenabstützung in paarweise symmetrischer Anordnung aufweisen können. Damit wird ein vergleichsweise einfaches und synchron lenkbares System gebildet.

Dabei ist vorgesehen, dass der Funktionsrahmen als eine eigenständig bewegliche Einheit verwendet werden kann. Diese autarke Einheit kann zum Verbinden mit oder Lösen von dem zumindest einen Anbaugerät jeweilige Positionier- und Kuppelbewegungen ausführen. Dabei ist auch eine automatische Steuerung denkbar. Diese kann auf eine Konstruktion mit autonomer Kupplung der Komponenten gerichtet sein.

Zum Verbinden der Komponenten kann das jeweilige Anbaugerät ortsfest platziert werden. Ausgehend von dieser Position wird dann der Funktionsrahmen "heranbewegt". Dabei können Fahr-, Schub-, Hub- und/oder Schwenkbewegungen des Funktionsrahmens so ausgeführt werden, dass die Systemkomponenten verbunden oder gelöst werden. Der autark bewegliche Funktionsrahmen ist dazu so konzipiert, dass im Bereich jeweiliger Verbindungspunkte landwirtschaftliche Geräte-Typen weitgehend beliebiger Konfiguration anbringbar sind. Damit sind die Voraussetzungen für eine vollautonome Anwendung der erfindungsgemäßen Arbeitsmaschine geschaffen.

Die optimale Umsetzung der Konstruktion sieht vor, dass in kompakter Bauweise der asymmetrische Basisträger des Systems mit zumindest einer Energieversorgungseinheit ausgerüstet ist. Diese an bzw. in dem Basisträger vorgesehene Energieversorgungseinheit wird dabei zu dem zumindest einen Anbaugerät geführt, ist mit dem Fahrantrieb koppelbar und gleichzeitig mit zumindest einem Kühler-Lüfter-System verbunden. Dabei ist vorgesehen, dass die Energieversorgungseinheit im Bereich der Seitenträger die hier vorgesehenen Antriebsaggregate aktivieren kann. Damit ist die angestrebte kompakte Konstruktion erreichbar.

Eine vorteilhafte Ausführung des Basisträgers sieht vor, dass dieser nach Art eines "Hohlträgers" ausgeführt ist. Dabei ist das System so aufgebaut, dass ein zumindest bereichsweise von Konturplatten umgriffener und die wesentlichen Funktionsteile des Systems aufnehmender Innenraum definiert wird. In diesem Innenraum kann mittels des Kühler-Lüfter-Systems ein Überdruck erzeugt werden, so dass bei effektiver Wärmeregulierung auch ein Verschmutzungsschutz erreicht wird. Es versteht sich, dass aus diesem Innenraum heraus zumindest der eine Antriebsstrang für die Anbaugeräte und/oder die Antriebsräder herausgeführt werden kann.

Das Gesamtkonzept sieht auch vor, dass der mit zumindest einem der Seitenträger versehene Funktionsrahmen als eine modulare Einheit ausgebildet werden kann. Dabei ist vorgesehen, dass insbesondere ein Lösen der Seitenträger vom Basisträger möglich ist, derart, dass eine kompakte Demontage für denkbare Transporte erreicht werden kann. Ebenso ist vorgesehen, dass im Bereich der Konturplatten jeweilige modulare Segmente vorgesehen sind, so dass mit geringem Aufwand jeweilige Montageöffnungen freigebbar sind und dabei die Stabilität des Systems erhalten bleibt.

Im Bereich der an den Seitenträgern vorgesehenen Bodenabstützungen ist der Funktionsrahmen mit zumindest jeweils einem Lenkzylinder versehen. Mit diesem sind jeweilige die Straßen- oder Feldfahrrichtung vorgebende Fixierpositionen für die Fahrraupen ansteuerbar. Dabei ist vorgesehen, dass mechanische Rastelemente eine fahrstabile Festlegung vorgeben.

Die vorzugsweise als Bodenabstützung vorgesehenen Fahrraupen definieren innerhalb ihrer Bewegungsbahn einen inneren Stützraum, in dem die Antriebskomponenten effektiv platziert werden können. Es ist vorgesehen, dass im inneren Stützraum insbesondere ein E-Motor mit Planetengetriebe angeordnet wird. Diese Baugruppe ist dabei so angeordnet, dass eine seitlich überstandsfreie, unterhalb der Breite der Fahrraupen verlaufende Einbaulage erreicht ist und damit Beschädigungen effektiv vermeidbar sind.

Für eine effektive Krafteinleitung im Bereich der Fahrraupen ist vorgesehen, dass die Bodenabstützungen einen in eine vertikale Hohlwelle als stützende Lenkwelle eingreifenden Hubzylinder aufweisen. Mit dieser Stützverbindung sind auch hohe Gewichtsbelastungen effektiv aufnehmbar.

Für eine weitgehend automatische Kopplung von Anbaugeräten ist der Basisträger mit jeweiligen Twistlock-Verbindern versehen, so dass Standardbauteile effektiv eingesetzt werden können. Im Bereich des optional vorgesehenen Fahrerhauses des Systems ist vorgesehen, dass mittels einer schwenkbaren Stützverbindung unterschiedliche Nutzungspositionen für das Fahrerhaus vorgegeben werden können.

Die Erfindung betrifft somit eine selbstfahrende Arbeitsmaschine für die Landwirtschaft, mit einer jeweilige Anbaugeräte aufnehmenden, zumindest ein Antriebsaggregat mit Steuerungsbaugruppe aufweisenden und mittels endseitiger Bodenabstützungen beweglichen Tragstruktur, die für variierbare Arbeitsaufgaben ein mit zumindest einem Basisträger versehenes landwirtschaftliches Gantrie-System bildet, das ausgehend von einer eine Fahrbreite definierenden Straßenausrichtung in eine eine wesentlich größere Arbeitsbreite aufweisende Arbeitsausrichtung umrüstbar ist, wobei die Tragstruktur mit jeweiligen die Bodenabstützungen aufweisenden Seitenträgern versehen ist. Die selbstfahrende Arbeitsmaschine ist dadurch weitergebildet, dass die in Straßenausrichtung eine Längsausrichtung definierende Tragstruktur im Bereich ihrer beiden endseitigen Bodenabstützungen eine sich zwischen diesen erstreckende vertikale Längsmittelebene aufweist und in räumlicher Ausrichtung zu dieser ein Funktionsrahmen mit asymmetrischem Basisträger als Tragstruktur gebildet ist, derart, dass der Basisträger ausgehend von einem Längenmaß möglicher Fahrbreite(n) ausschließlich in einem jeweiligen äußeren Teilungsdrittel dieses Längenmaßes mit dem zumindest einen Seitenträger verbunden ist. Das Gantrie-System wird z.B. auch als Gantry-System oder als Portalsystem oder Brückensystem bezeichnet.

Die selbstfahrende Arbeitsmaschine ist vorzugsweise derart weitergebildet, dass in Straßenausrichtung des Funktionsrahmens dessen parallel oder im Wesentlichen parallel zur Fahrtrichtung verlaufender asymmetrischer Basisträger eine seitliche Begrenzungsfläche für eine einzuhaltende, maximal zulässige Fahrbreite definiert.

Vorteilhaft bildet die Tragstruktur mit asymmetrischem Basisträger zumindest einen zentralen Aufnahmeraum aus.

Bevorzugt weist der Funktionsrahmen eine in Draufsicht L-förmige oder im Wesentlichen L-förmige Tragstruktur mit nur einem der Seitenträger auf.

Vorzugsweise ist der Funktionsrahmen an seinem Basisträger mit mehreren als Seitenträger nutzbaren Baugruppen versehen, insbesondere derart, dass ein in Draufsicht E- oder U-förmiger oder im Wesentlichen E- oder U-förmiger Funktionsrahmen gebildet ist.

Die selbstfahrende Arbeitsmaschine ist vorteilhaft derart weitergebildet, dass an den beiden Endbereichen des Basisträgers jeweils nur einer der Seitenträger vorgesehen ist und damit insbesondere ein von drei Trägern zumindest bereichsweise umgrenzter Aufnahmeraum definierbar oder definiert ist.

Die selbstfahrende Arbeitsmaschine ist bevorzugt derart weitergebildet, dass mit variablen Längen des Basisträgers und variablen Längenmaßen der/des Seitenträger(s) eine zumindest bereichsweise zweiseitig umfasste Grundfläche definiert wird oder ist und mit dieser insbesondere das Volumen zumindest des zentralen Aufnahmeraumes des Funktionsrahmens variabel gestaltbar oder gestaltet ist.

Vorzugsweise sind im Bereich des Funktionsrahmens mehrere, im Höhenmaß variabel zu bemessende Aufnahmeräume vorgesehen.

Vorteilhaft weist der Funktionsrahmen zumindest im Bereich des zentralen Aufnahmeraumes zumindest drei Funktionsabschnitte zur Kopplung von Anbaugeräten in einer Ebene auf, insbesondere derart, dass mit dem Basisträger und/oder den jeweiligen Seitenträgern jeweils zumindest eine Anbauposition für zumindest eines der landwirtschaftlichen Anbaugeräte vorgebbar oder vorgegeben ist.

Die selbstfahrende Arbeitsmaschine ist bevorzugt derart weitergebildet, dass der Basisträger und/oder die Seitenträger in ihrer horizontalen Lage und/oder ihrer vertikalen Höhe oberhalb einer Straßen- oder Feldarbeitsfläche einstellbar ist oder sind.

Vorzugsweise sind die insbesondere mit Stützrädern und/oder Bandlaufwerken und/oder dergleichen versehenen Bodenabstützungen verstellbar mit dem Funktionsrahmen verbunden.

Die selbstfahrende Arbeitsmaschine ist vorteilhaft derart weitergebildet, dass an den jeweiligen Seitenträgern jeweils zumindest eine Bodenabstützung vorgesehen ist und diese insbesondere mit einer jeweiligen Schwenkkonstruktion versehen sind, vorzugsweise derart, dass in zumindest einer Bedienstellung der Bodenabstützung(en) ein zusätzlicher Freiraum als Zugang zumindest in den zentralen Aufnahmeraum herstellbar oder hergestellt ist.

Bevorzugt sind an jedem der Seitenträger zwei paarweise zusammenwirkende Stützräder und/oder Bandlaufwerke als die jeweils verlagerbare Bodenabstützung vorgesehen.

Vorzugsweise ist im Bereich des Funktionsrahmens zumindest einer der Seitenträger in Relation zum Basisträger verlagerbar mit diesem verbunden.

Die selbstfahrende Arbeitsmaschine ist vorteilhaft derart weitergebildet, dass der Funktionsrahmen im Bereich des Basisträgers und/oder zumindest eines der Seitenträger teleskopisch ausgebildet ist oder sind.

Bevorzugt ist das einen Verbrennungsmotor aufweisende und/oder elektrisch bzw. hydraulisch betätigte Antriebsaggregat des Systems wahlweise im Bereich des Basisträgers und/oder eines der Seitenträger angeordnet.

Vorzugsweise definiert das zumindest eine Anbaugerät am Funktionsrahmen eine strukturaussteifende Verbindungslage, insbesondere derart, dass bei jeweiliger Nutzung des Systems sowohl in Arbeitsausrichtung als auch in Straßenausrichtung eine optimale Lastverteilung am Funktionsrahmen erreichbar oder erreicht ist.

Vorteilhaft ist oder sind der Basisträger und/oder die Seitenträger in einer quer zu dessen oder deren Längsrichtung definierbaren Umfangsrichtung allseitig mit jeweiligen Verbindungsbereichen für zumindest eines der variabel anwendbaren Anbaugeräte versehen.

Bevorzugt weist oder weisen das/die Anbaugerät(e) eine dem jeweiligen Träger des Funktionsrahmens mehrseitig zugeordnete Verbindungslage auf, insbesondere derart, dass das/die Anbaugerät(e) den jeweiligen Träger in dessen Umfangsrichtung zumindest bereichsweise umschließt oder umschließen.

Vorzugsweise sind im Bereich des Basisträgers und/oder der beiden Seitenträger gleichzeitig mehrere, insbesondere auch auf unterschiedliche Arbeitswirkungen gerichtete Anbaugeräte festlegbar.

Vorteilhaft sind im Bereich des Funktionsrahmens jeweilige für einen, insbesondere weitgehend, selbsttätigen An- und Abbau der Anbaugeräte aktivierbare Fixierelemente vorgesehen.

Die selbstfahrende Arbeitsmaschine ist bevorzugt derart weitergebildet, dass das ein oder mehrere Antriebsaggregate(e) aufweisende System mit mehreren Antriebsverbindungen versehen ist und damit insbesondere die jeweiligen variabel positionierbaren Anbaugeräte einzeln oder gemeinsam bedienbar sind.

Die selbstfahrende Arbeitsmaschine ist vorzugsweise derart weitergebildet, dass das insbesondere über Bandlaufwerke bodenseitig abgestützte System mit dem asymmetrischen Funktionsrahmen mit gekoppeltem(n) Anbaugerät(en) in einer kompakten Straßenfahrlage positionierbar ist und dabei insbesondere die Bandlaufwerke im Bereich zumindest einer der beiden seitlichen Bezugsflächen (9) überstandsfrei ausrichtbar sind.

Die selbstfahrende Arbeitsmaschine ist vorteilhaft derart weitergebildet, dass der asymmetrische Funktionsrahmen an den die U-Struktur oder L-Struktur bildenden Seitenträgern jeweils vier Raupenketten, vier Bandlaufwerke, vier Stützräder oder dergleichen Bodenabstützungen in paarweise symmetrischer Anordnung aufweist und damit insbesondere ein synchron lenkbares System gebildet ist.

Bevorzugt bildet der Funktionsrahmen eine eigenständig bewegliche Einheit.

Vorzugsweise sind zum Verbinden oder Lösen des zumindest einen Anbaugerätes jeweilige steuerbare Positionier- und/oder Kuppelbewegungen vom Funktionsrahmen ausführbar.

Die selbstfahrende Arbeitsmaschine ist vorteilhaft derart weitergebildet, dass das zumindest eine Anbaugerät ortsfest oder weitgehend ortsfest platziert ist und in dieser Position insbesondere durch jeweilige Fahr-, Schub-, Hub- und/oder Schwenkbewegungen des Funktionsrahmens die Systemkomponenten kuppel- bzw. entkuppelbar sind.

Bevorzugt ist der Funktionsrahmen im Bereich seiner jeweiligen Verbindungspunkte mit landwirtschaftlichen Geräte-Typen beliebiger oder weitgehend beliebiger Konfiguration verbindbar oder verbunden.

Die selbstfahrende Arbeitsmaschine ist vorzugsweise derart weitergebildet, dass in Straßenausrichtung des Funktionsrahmens dessen im Wesentlichen parallel zur Fahrtrichtung verlaufender asymmetrischer Basisträger mit zumindest einer Energieversorgungseinheit versehen ist und diese insbesondere mit zumindest einem zum Anbaugerät geführten oder führbaren, mit dem Fahrantrieb gekoppelten oder koppelbaren sowie zumindest ein Kühler-Lüfter-System im Bereich der Seitenträger aktivierenden Antriebsaggregat zusammenwirkt.

Vorteilhaft definiert der Basisträger einen zumindest bereichsweise von Konturplatten umgriffenen und Funktionsteile des Systems aufnehmenden Innenraum, wobei in diesem einerseits mittels des Kühler-Lüfter-Systems ein Überdruck erzeugbar ist und aus diesem andererseits zumindest ein Antriebsstrang für Anbaugeräte herausführbar oder herausgeführt ist.

Bevorzugt ist der mit zumindest einem der Seitenträger versehene Funktionsrahmen als eine modulare Einheit ausgebildet, vorzugsweise derart, dass insbesondere im Bereich der Konturplatten eine Montageöffnung freigebbar ist und die Seitenträger vom Basisträger lösbar sind.

Die selbstfahrende Arbeitsmaschine ist vorzugsweise derart weitergebildet, dass der Funktionsrahmen im Bereich der an den Seitenträgern vorgesehenen Bodenabstützungen jeweils mit zumindest einem Lenkzylinder versehen ist und mit diesem insbesondere jeweilige die Straßen- oder Feldfahrrichtung vorgebende Fixierpositionen der Fahrraupen ansteuerbar sind.

Vorteilhaft weisen die als Bodenabstützungen vorgesehenen Fahrraupen in einem von deren Bewegungsbahn umgriffenen inneren Stützraum einen E-Motor mit Planetengetriebe auf, wobei diese Baugruppe insbesondere überstandsfrei unter der Breite der Fahrraupen verläuft.

Bevorzugt weisen die Bodenabstützungen einen in eine vertikale Hohlwelle als Lenkwelle eingreifenden Hubzylinder auf.

Vorzugsweise ist der Basisträger im Bereich jeweiliger Twistlock-Verbinder für eine weitgehend automatische Kopplung von Anbaugeräten ausgebildet.

Vorteilhaft ist das Fahrerhaus im Bereich seiner Stützverbindung schwenkbar und/oder anhebbar.

Weitere Einzelheiten der erfindungsgemäßen Arbeitsmaschine ergeben sich aus der nachfolgenden Beschreibung. Dazu werden die beiliegenden Zeichnungen zur Erläuterung herangezogen. Die Zeichnungen zeigen:
- Fig. 1: eine Perspektivdarstellung einer Tragstruktur für eine landwirtschaftliche Arbeitsmaschine, die die Basis eines Gantrie-Systems gemäß dem Stand der Technik bildet,
- Fig. 2: eine Draufsicht eines erfindungsgemäßen Systems mit einen asymmetrischen Basisträger aufweisendem Funktionsrahmen,
- Fig. 3: eine Perspektivdarstellung ähnlich Fig. 2 mit dem erfindungsgemäßen Funktionsrahmen in Arbeitsausrichtung,
- Fig. 4: eine Draufsicht des Funktionsrahmens in Straßenausrichtung,
- Fig. 5: eine Perspektivdarstellung des Funktionsrahmens gemäß Fig. 4,
- Fig. 6: eine Draufsicht des Funktionsrahmens ähnlich Fig. 4 mit einer Steuerkabine,
- Fig. 7: eine Perspektivdarstellung des Systems gemäß Fig. 6,
- Fig. 8: eine Perspektivdarstellung des Funktionsrahmens ähnlich Fig. 3 mit schematischer Darstellung der Einbaulage von Anbaugeräten,
- Fig. 9: eine Schnittdarstellung gemäß Pfeil A-A in Fig. 8,
- Fig. 10: eine Draufsicht des Funktionsrahmens ähnlich Fig. 2 mit in einen zentralen Aufnahmeraum integriertem Anbaugerät,
- Fig. 11: eine Perspektivdarstellung der in Arbeitsausrichtung positionierten selbstfahrenden Arbeitsmaschine,
- Fig. 12: eine Draufsicht ähnlich Fig. 2 mit einem L-förmigen Funktionsrahmen,
- Fig. 13: eine Ansicht des Funktionsrahmens in Arbeitsausrichtung mit Blickrichtung gemäß Pfeil III in Fig. 3,
- Fig. 14 bis Fig. 16: jeweilige Phasen von Bewegungen des Funktionsrahmens beim Verbinden mit einem Anbaugerät,
- Fig. 17: eine schematische Darstellung des Systems mit in den Basisträger integrierten Baugruppen,
- Fig. 18 und Fig. 19: jeweilige Detaildarstellungen von Baugruppen des Antriebs und der Belüftung des Systems,
- Fig. 20: eine Prinzipdarstellung der Teilung des modularen Systems,
- Fig. 21: eine Querschnittsdarstellung des Basisträgers,
- Fig. 22 bis Fig. 26: jeweilige Detaildarstellungen von Lenk- und Stützbaugruppen im Bereich der Antriebsraupen, und
- Fig. 27: eine Ausschnittsdarstellung im Bereich einer Twistlock-Verbindung für Anbaugeräte.

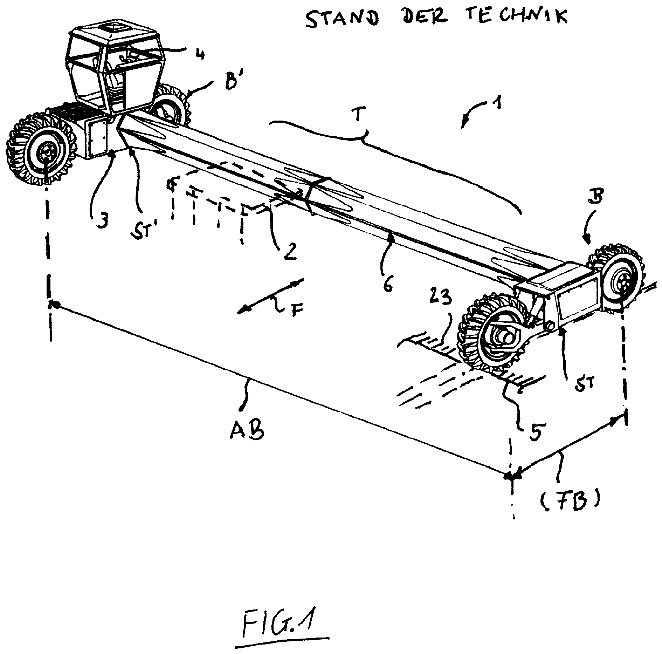

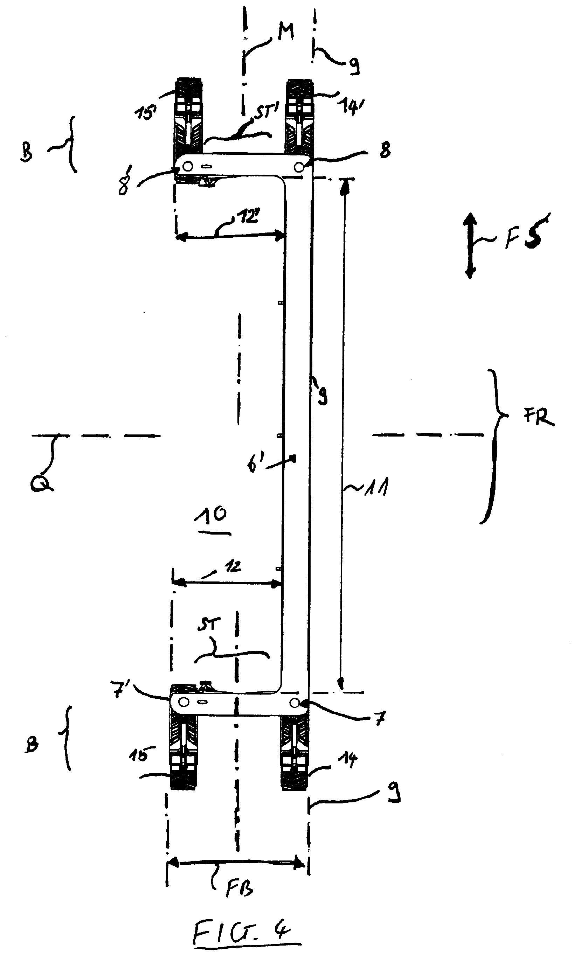

Ein grundlegendes Prinzip einer selbstfahrenden Arbeitsmaschine für die Landwirtschaft ist in Fig. 1 als Stand der Technik dargestellt. Diese ein landwirtschaftliches Gantrie-System bildende Arbeitsmaschine 1 weist eine Tragstruktur T auf, die ihrerseits jeweilige Anbaugeräte 2 aufnehmen kann, zumindest ein Antriebsaggregat 3 mit Steuerungsbaugruppe 4 aufweist und mittels endseitiger Bodenabstützungen B, B' auf dem Untergrund 5 beweglich ist. Diese Tragstruktur T bildet dabei mit zumindest einem Basisträger 6 als weitgehend zentral verlaufende Baugruppe das landwirtschaftliche Gantrie-System, das im Bereich des Anbaugerätes 2 an variierbare Arbeitsaufgaben angepasst werden kann. Ausgehend von der in Fig. 1 dargestellten Arbeitsausrichtung des Systems (wahlweise Fahrtrichtung F) mit einer Arbeitsbreite AB können derartige Gantrie-Systeme in eine eine Fahrbreite FB (ähnlich: Fig. 4) definierende Straßenausrichtung (Fahrtrichtung FS) umgerüstet werden. Dazu nutzt die Tragstruktur T die am zentralen Basisträger 6 vorgesehenen Seitenträger ST, ST' mit den Bodenabstützungen B, B'.

Die selbstfahrende Arbeitsmaschine 1 basiert erfindungsgemäß auf einer Bauteilkombination, mit der die bekannten Tragstrukturen T von Gantrie-Systemen der Landwirtschaft verbessert werden. Nunmehr ist vorgesehen, dass in Straßenausrichtung mit Fahrtrichtung FS der Arbeitsmaschine 1 die endseitig am Basisträger 6' angeordneten Bodenabstützungen B, B' eine sich zwischen diesen erstreckende vertikale Längsmittelebene M definieren (Fig. 4). In Relation zu dieser für die Straßenausrichtung funktionalen Längsmittelebene M ist die Tragstruktur erfindungsgemäß als ein Funktionsrahmen FR mit asymmetrischem Basisträger 6' ausgebildet.

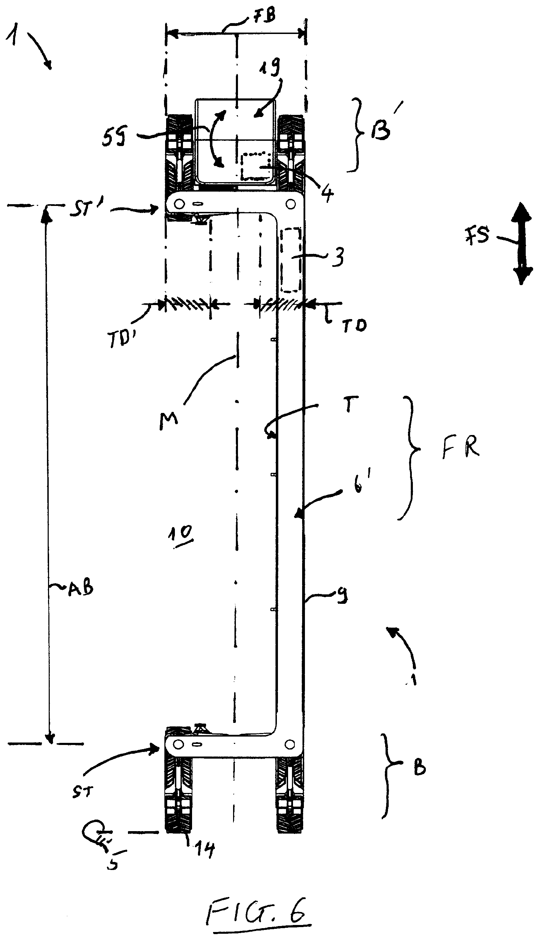

Daraus folgt eine Vielzahl konstruktiv möglicher Gestaltungen, bei denen ausgehend von einem auch variablen Maß der möglichen Fahrbreite(n) FB eine Optimierung der Lage des Basisträgers 6' mit Blick auf die Stabilität des Bauteil-Verbund-Systems möglich wird. Es hat sich gezeigt, dass der Basisträger 6' insbesondere in einem jeweiligen äußeren Teilungsdrittel TD, TD' (Fig. 6, oben) dieses Längenmaßes FB mit dem zumindest einen Seitenträger ST, ST' verbunden werden kann.

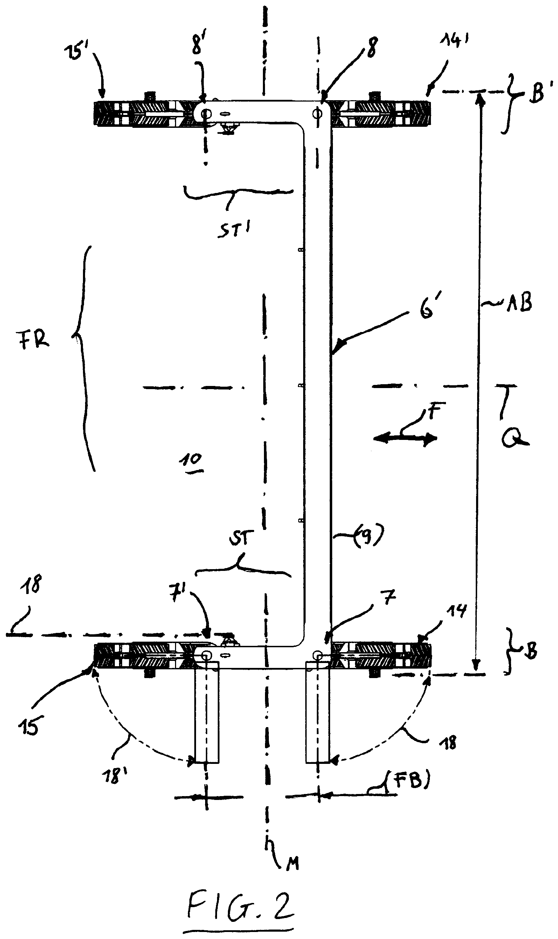

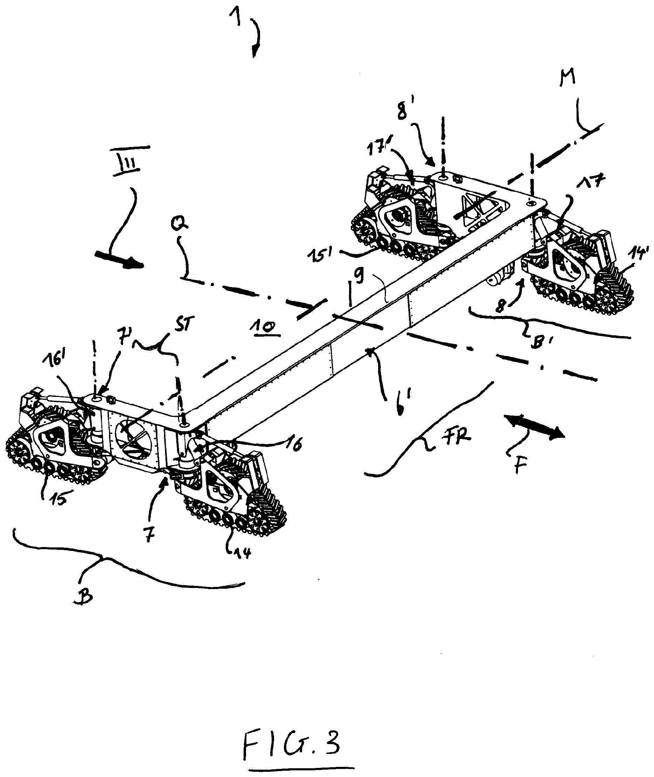

Aus einer Zusammenschau der Darstellungen gemäß Fig. 2 bis Fig. 7 wird deutlich, dass - ausgehend von variabel vorgebbaren Fahrbreiten (Längenmaß FB) dieses asymmetrischen Systems - der Basisträger 6' an dem zumindest einen Seitenträger ST, ST' jeweilige, zur Quermittelebene Q gemäß Arbeitsausrichtung (Fig. 2, Fig. 3) weitgehend spiegelbildlich angeordnete Verbindungsbereiche 7, 7'; 8, 8' für die Bodenabstützungen B, B' definiert.

Ausgehend von dem erfindungsgemäßen Konzept des asymmetrischen Funktionsrahmens FR ergibt sich damit die Möglichkeit, dass dessen im Wesentlichen parallel zur Fahrtrichtung FS bzw. Längsmittelebene M verlaufender Basisträger 6' eine durchgehende seitliche Bezugsfläche 9 (Fig. 4) bilden kann. Diese wird dann für eine einzuhaltende, maximal zulässige Fahrbreite - gemäß Längenmaß FB - als Ausgangsebene herangezogen.

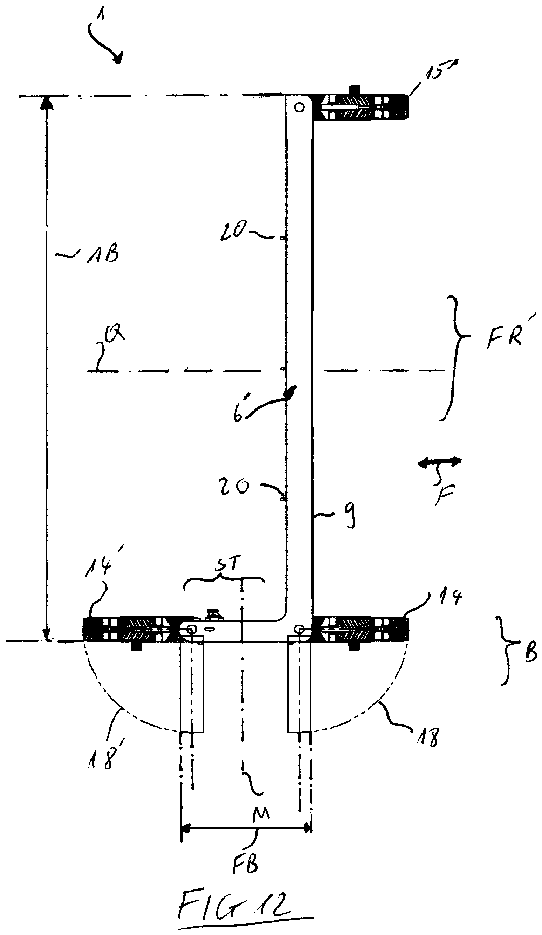

Denkbar ist dabei eine Ausführung der Rahmen-Konstruktion, bei der der Funktionsrahmen FR' eine in Draufsicht im Wesentlichen L-förmige Tragstruktur mit nur einem der Seitenträger ST, ST' aufweist (Fig. 12). Diese Konstruktion ist zu den weiteren dargestellten Rahmen-Varianten weitgehend äquivalent, so dass die Einzelbauteile entsprechend konzipiert sind.

Eine optimale Kombination der Träger-Baugruppen sieht vor, dass der Funktionsrahmen FR an seinem Basisträger 6 mit mehreren, als jeweilige Seitenträger ST, ST' nutzbaren Komponenten versehen wird. Damit ergibt sich für den praktischen Einsatz eine Konstruktion, bei der ein in Draufsicht im Wesentlichen U-förmiger Funktionsrahmen FR (Fig. 2 bis Fig. 11; Fig. 13 bis Fig. 16) genutzt wird. Denkbar ist auch eine E- oder F-förmige Konstruktion (nicht dargestellt).

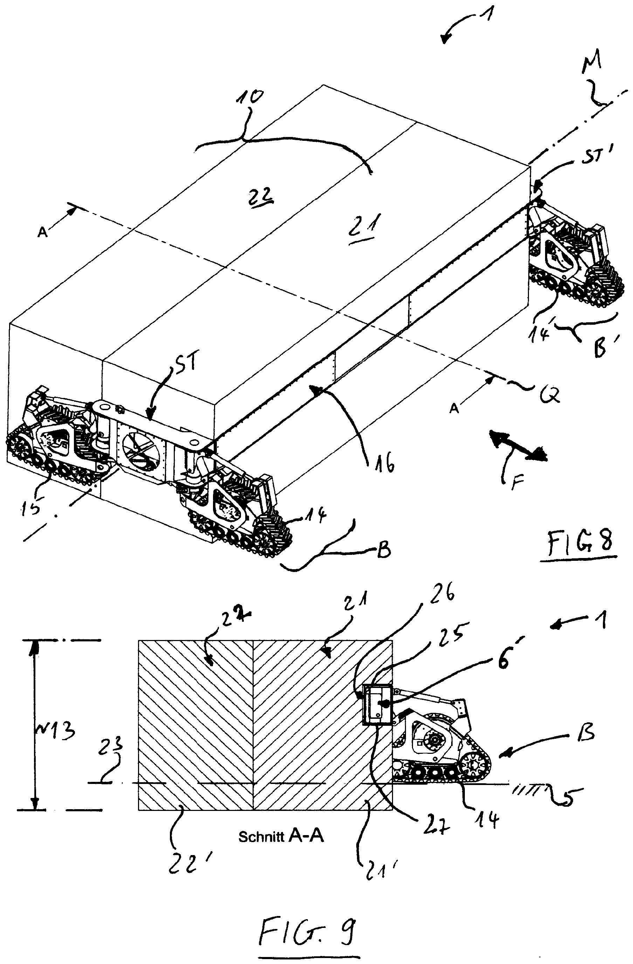

Für die bevorzugte Ausführung des U-Rahmens ergibt sich, dass an den beiden Endbereichen des Basisträgers 6 jeweils nur einer der Seitenträger ST, ST' vorgesehen ist. Dieses Drei-Träger-Konzept ist darauf gerichtet, einen zentralen Aufnahmeraum 10 zu schaffen, der bereichsweise umgrenzt ist und damit ein erfinderisches Basiselement ausbildet. Damit kann mit variablen Längen 11 des Basisträgers 6 und variablen Längenmaßen 12, 12' der Seitenträger ST, ST' eine dreiseitig umfasste Grundfläche des Funktionsrahmens FR im Bereich des "inneren" Aufnahmeraumes 10 definiert werden (Fig. 4). Daraus ergibt sich dann für die praktische Anwendung der Bauteilkombination, dass mit dieser variabel zu gestaltenden Grundfläche mit den Maßen 11 und 12 das nutzbare Aufnahmevolumen - entsprechend der Höhe 13 (Fig. 8) - im Bereich des zentralen Aufnahmeraumes 10 auch eine Vielzahl variabler Ausnutzungen ermöglicht (Fig. 8 bis Fig. 16) und damit Konzepte des Ackerns, Säens, Düngens, Spritzens und Erntens optimal umsetzbar werden.

Das modulare Gesamtsystem im Bereich des Funktionsrahmens FR ist auch darauf gerichtet, dass im Bereich des Funktionsrahmens FR mehrere, im Höhenmaß 13 (Fig. 9) variabel zu bemessende Aufnahmeräume 10, 10' definiert werden können.

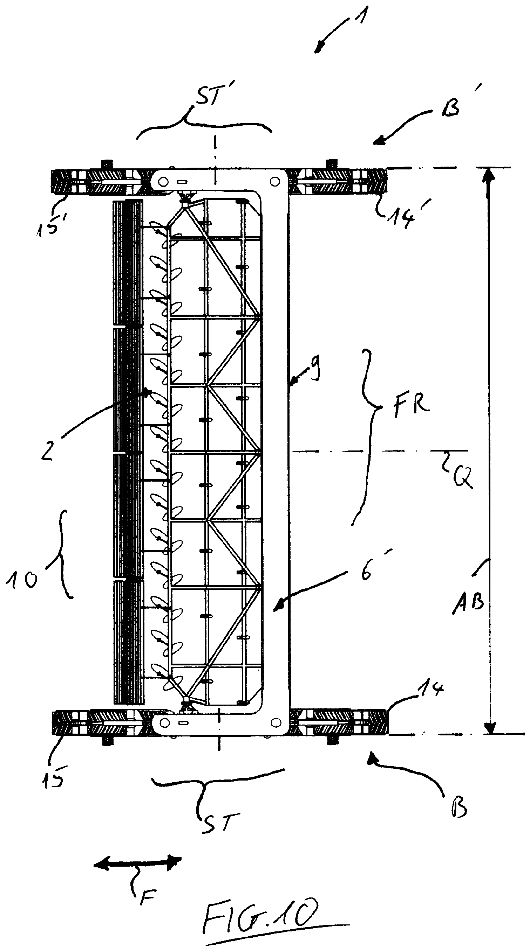

Dabei wird deutlich, dass der "dreiseitige" Funktionsrahmen FR mit dem asymmetrischen Basisträger 6 und den Seitenträgern ST, ST' zumindest im inneren Bereich des zentralen Aufnahmeraumes 10 mehrere - insbesondere zumindest drei - Funktionsabschnitte zur Kopplung und Entkopplung von Anbaugeräten 2' (Fig. 10) aufweist. Die Anbaugeräte 2' können dabei vorzugsweise jeweilige Raumbereiche 21, 22 (Fig. 8, quaderförmige Struktur; Fig. 9, schraffierte Querschnitte des Aufnahmeraumes) einnehmen, in denen eine stabile Abstützung gewährleistet ist. Mit jeweiligen Raumbereichen 21' und 22' ist die Bearbeitung der Ackerfläche im Bereich des Untergrundes 5 angedeutet.

Weitere konstruktive Verbesserungen des Funktionsrahmens FR sind darauf gerichtet, dass der Basisträger 6 und/oder die Seitenträger ST, ST' in ihrer jeweiligen horizontalen Lage - d. h. in Richtung der Längsmittelebene M oder der Querebene Q - und/oder ihrer vertikalen Höhe 13 oberhalb einer Straßen- oder Feldarbeitsfläche 5 (Fig. 9) weitgehend beliebig einstellbar sein können. Dabei ist ebenso denkbar, dass die insbesondere mit Stützrädern, Bandlaufwerken o. dgl. versehenen Bodenabstützungen B, B' ihrerseits verstellbar mit dem Funktionsrahmen FR verbunden sind.

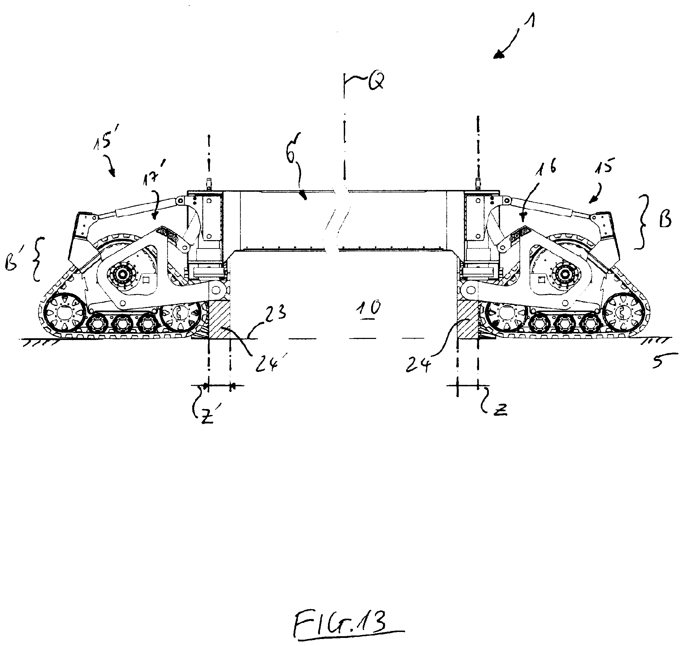

Aus der Darstellung in Fig. 2 (ähnlich Fig. 12) ist im Bereich der Bodenabstützung B - mit den Verbindungsbereichen 7, 7' - die für die Verlagerung aus der Arbeitsausrichtung (Arbeitsbreite AB) in die Straßenausrichtung (Fahrbreite FB) denkbare Verstellmöglichkeit prinzipiell veranschaulicht. An dem Seitenträger ST sind dabei jeweilige Bandlaufwerke 14, 15, 14', 15' (bei ST') vorgesehen, die über eine spezielle Schwenkkonstruktion 16, 16'; 17, 17' (Fig. 3) gehalten sind. Diese Schwenkkonstruktion 16, 16'; 17, 17' ermöglicht die mit einem Pfeil 18, 18' teilweise angedeuteten Schwenkbewegungen. In Zusammenschau des Prinzips gemäß Fig. 2 mit der "aufgeschwenkten" Vorderansicht gemäß Fig. 13 wird deutlich, dass in zumindest einer Bedienstellung der Bodenabstützungen B, B' ein zusätzlicher seitliche Freiraum 24, 24' (Breite Z, Z') als Zugang in den zumindest zentralen Aufnahmeraum 10 herstellbar ist. Damit ist die Kopplung und Entkopplung der Anbaugeräte 2 (Fig. 10) ohne Behinderung durch die Bauteile der Bodenabstützungen B, B' möglich. Die optimale Gestaltung dieser in "Freigabestellung" verlagerbaren Komponenten sieht vor, dass an jedem der Seitenträger ST, ST' zwei paarweise zusammenwirkende Stützräder oder Bandlaufwerke 14, 15, 14', 15' als die jeweils verlagerbare Bodenabstützung B, B' vorgesehen sind.

Weitere Verbesserungen des asymmetrischen Drei-Träger-Systems können dadurch erreicht werden, dass im Bereich des Funktionsrahmens FR zumindest einer der Seitenträger ST, ST' in Relation zum Basisträger 6' verlagerbar mit diesem verbunden wird. Ebenso ist denkbar, dass der Funktionsrahmen FR im Bereich des Basisträgers 6' und/oder zumindest eines der Seitenträger ST, ST' mit teleskopischen Bauteilen ausgebildet werden kann (nicht dargestellt).

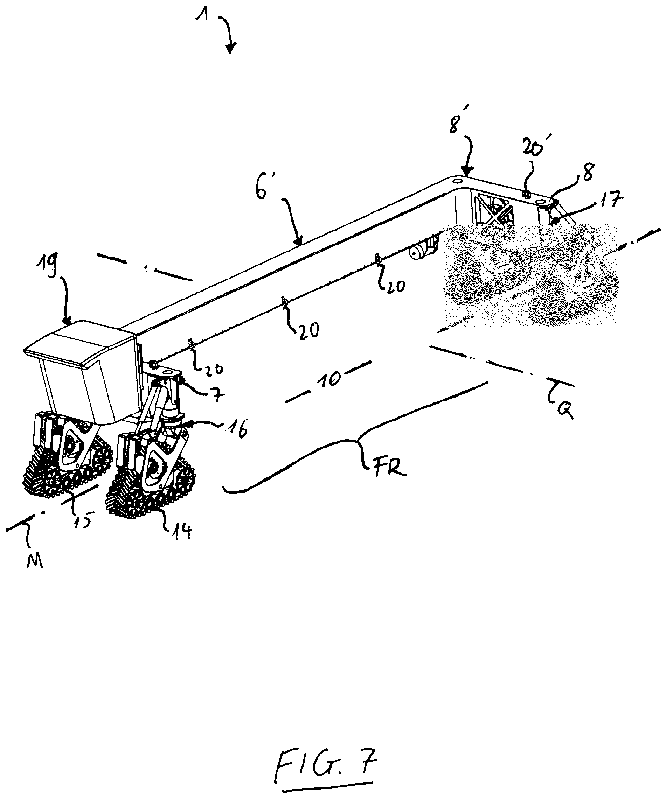

Zur Komplettierung der selbstfahrenden Arbeitsmaschine 1 sind entsprechende Antriebs- und Steuerungsbaugruppen vorgesehen. Dabei kann ein von einem Fahrerhaus 19 (Fig. 6, Fig. 7) bedienbares System mit einer nicht näher dargestellten, als Motor-Getriebe-Einheit ausgebildeten Antriebskonstruktion versehen sein. Diese ist als Verbrennungsmotor, Elektromotor, Hydraulikmotor o. dgl. ausführbar. Die Antriebs-konstruktion kann ihrerseits im Bereich des Basisträgers 6 und/oder eines der Seitenträger ST, ST' angeordnet werden (nicht näher dargestellt). Ebenso ist denkbar, aus dem Stand der Technik bekannte Baugruppen für eine weitgehend automatische Steuerung - beispielsweise ein GPS-geführtes System - für die Maschine 1 einzusetzen. Das Gesamtkonzept der Arbeitsmaschine 1 ist so ausgelegt, dass auch eine vollautonome Bedienung und Anwendung möglich ist.

Die Basiskonstruktion des erfindungsgemäßen Funktionsrahmens FR ist für den modularen Aufbau und die stabile Ausführung für jeden Anwendungsfall so ausgelegt, dass mit der Basisträger-Seitenträger-Einheit auch komplexe Strukturen von Anbaugeräten, beispielsweise komplette Erntegeräte wie Schneidwerke, Mähdrescher o. dgl. multifunktionale Aggregate mit entsprechendem Zubehör, aufgenommen werden können. Vorteilhaft ist vorgesehen, dass das zumindest eine Anbaugerät 2 am Funktionsrahmen FR eine strukturaussteifende Verbindungslage definieren kann. Dieses Stabilisierungs-Konzept ist darauf gerichtet, dass bei Nutzungen des Systems sowohl in Arbeitsausrichtung als auch in Straßenausrichtung jeweils eine optimale Lastverteilung am Funktionsrahmen FR erreicht wird. Damit kann neben einer sicheren Handhabung der auch mit den Komponenten bestückten Maschine 1 auch die Langlebigkeit der Arbeitsmaschine 1 gewährleistet werden.

Dabei ist der Funktionsrahmen FR so aufgebaut, dass der Basisträger 6 und/oder die jeweiligen Seitenträger ST, ST' jeweils zumindest eine definierte Anbauposition für zumindest eines der landwirtschaftlichen Anbaugeräte 2 vorgeben können. Ausgehend von den Prinzipdarstellungen in Fig. 8 und Fig. 9 wird deutlich, dass der Basisträger 6' in seiner quer zu dessen Längsausrichtung definierbaren Umfangsrichtung auch allseitig mit jeweiligen Verbindungsbereichen für zumindest eines der variabel anwendbaren Anbaugeräte 2 versehen werden kann. In Fig. 8 und Fig. 9 ist der Basisträger 6' an drei Seiten 25, 26, 27 umfasst. Ebenso ist denkbar, dass an jeweiligen Innen- und/oder Außenseiten des jeweiligen Seitenträgers ST, ST' das zumindest eine Anbaugerät 2 anbringbar ist; in Fig. 8 ist der Aufnahmeraum 10 innenseitig an die Seitenträger ST, ST' angrenzend gezeigt.

Aus der Schnittdarstellung in Fig. 9 wird deutlich, dass die hier den Aufnahmeraum 10 ausfüllenden Anbaugeräte 2 (nur schematisch angedeutet) dem jeweiligen Basisträger 6 des Funktionsrahmens FR mehrseitig zugeordnet sind, so dass die Anbaugeräte 2 den Basisträger 6 in dessen Umfangsrichtung (Fig. 9, rechte Seite) zumindest bereichsweise umschließen. Ein ähnliches Konzept ist auch im Bereich der Seitenträger ST, ST' denkbar (nicht dargestellt).

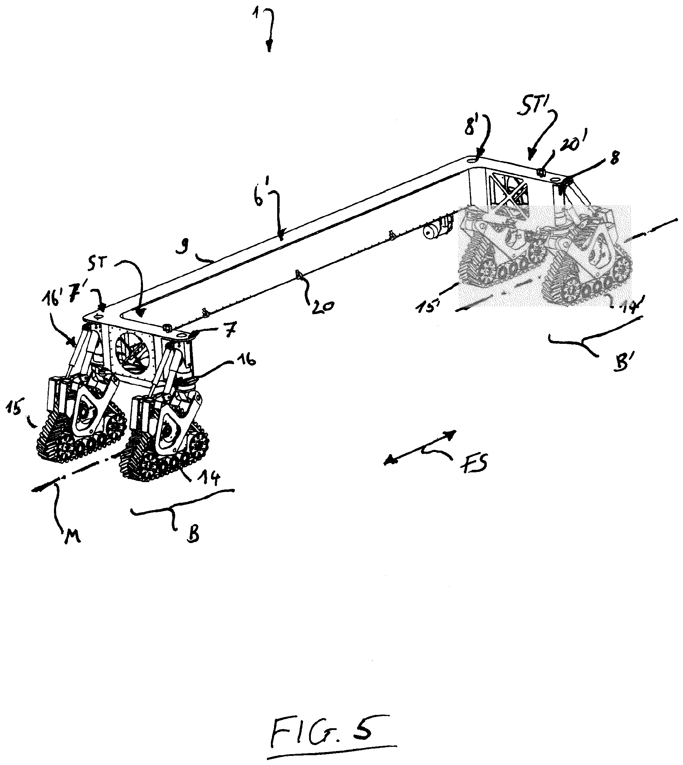

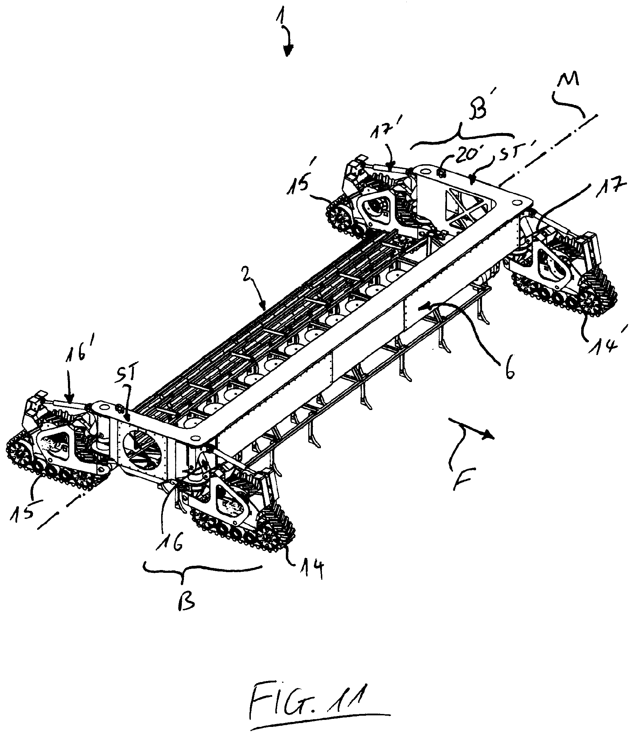

Die optimale Auslegung des Funktionsrahmens FR mit Blick auf eine weitgehend beliebige modulare Erweiterung sieht vor, dass im Bereich des Basisträgers 6' und/oder beider Seitenträger ST, ST' auch gleichzeitig mehrere, auf unterschiedliche Arbeitswirkungen gerichtete Anbaugeräte 2 festgelegt werden können. Damit können ausgehend von Arbeitsschritten der Bodenbearbeitung (Prinzipdarstellung gemäß Fig. 11) weitere landwirtschaftliche Bearbeitungsschritte mit Blick auf das Ausbringen von Saatgut, eine nachfolgende Düngung, zwischenzeitliche Schädlingsbekämpfung und den abschließenden Erntevorgang unter Ausnutzung der Arbeitsmaschine 1 durchgeführt werden. Für sämtliche Aufgaben sind im Bereich des Funktionsrahmens FR jeweilige Fixierelemente 20, 20' (Fig. 5, Fig. 6) für die speziellen Anbaugeräte 2 vorgesehen. Dabei sind Konstruktionen mit Stellbaugruppen denkbar, bei denen auch ein weitgehend selbsttätiger An- und/oder Abbau der Anbaugeräte 2 aktiviert werden kann. Ebenso ist denkbar, dass eine oder mehrere Antriebsmotor(en) als jeweilige Einheiten in das System integriert werden, so dass auch mehrere Antriebsverbindungen nutzbar sind. Mit dieser Ausführung kann dann die Bedienung der jeweiligen variabel positionierbaren Anbaugeräte 2 einzeln oder gemeinsam erfolgen.

Mit der erfindungsgemäßen Drei-Schenkel-Ausführung des Funktionsrahmens FR wird erreicht, dass der insbesondere mit vier Bandlaufwerken bodenseitig abgestützte Funktionsrahmen FR im Bereich seines "asymmetrischen Aufnahmesystems" auch mit in Koppelstellung befindlichen Anbaugeräten 2 in einer kompakten Straßenfahrlage positioniert werden kann. Aus den Darstellungen in Fig. 4 bis Fig. 7 wird dabei deutlich, dass die Bandlaufwerke 14, 15, 14', 15' in zumindest einer der beiden seitlichen Bezugsflächen 9 überstandsfrei ausgerichtet werden können und damit die Sicherheit in der Straßenausrichtung gewährleistet wird.

Die vorteilhafte Ausführung des Systems sieht vor, dass der asymmetrische Funktionsrahmen FR an den wahlweise die E-, F-, L- oder U-Struktur bildenden Seitenträgern ST, ST' jeweils vier Raupenketten, vier Bandlaufwerke, vier Stützräder o. dgl.

Bodenabstützungen B, B' in paarweise symmetrischer Anordnung aufweisen kann und damit eine synchron lenkbare Ausführung des Systems gebildet wird.

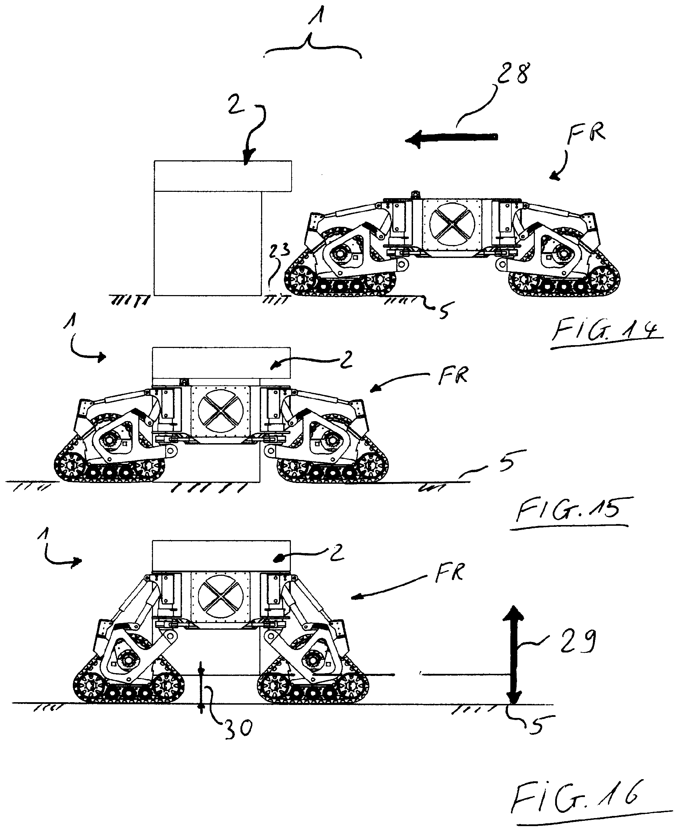

Aus den Prinzipdarstellungen gemäß Fig. 14 bis Fig. 16 wird deutlich, dass der erfindungsgemäße Funktionsrahmen FR als eine eigenständig bewegliche Einheit mit dem jeweiligen Anbaugerät 2 zusammenwirken kann. In Fig. 14 ist mit einem Pfeil 28 eine Fahrbewegung des Funktionsrahmens FR zu dem ortsfest auf dem Untergrund 5 gehaltenen Anbaugerät 2 hin angedeutet. Die mit dem Aufnahmeraum 10 (Fig. 10) vorgesehene Verbindungslage - am Basisträger 6' - ist in der gemäß Fig. 15 gezeigten Position erreicht. Damit wird deutlich, dass zum Verbinden - oder nachfolgend denkbaren Lösen - des zumindest einen Anbaugerätes 2 jeweilige steuerbare Positionier- und/oder Kuppelbewegungen vom Funktionsrahmen FR ausführbar sind. Dabei sind weitgehend beliebige Fahr-, Schub-, Hub- und/oder Schwenkbewegungen zum Kuppeln bzw. Entkuppeln von Systemkomponenten denkbar.

In Fig. 16 ist mit einem Pfeil 29 eine zusätzliche Hubbewegung zum Positionieren des Anbaugerätes 2 in einer Höhe 30 oberhalb des Untergrunds 5 dargestellt. Das Systemkonzept des erfindungsgemäßen Funktionsrahmens FR ist darauf gerichtet, dass dieser im Bereich seiner jeweiligen Verbindungspunkte (beispielhaft: 20, 20') mit landwirtschaftlichen Geräte-Typen weitgehend beliebiger Konfiguration optimal verbindbar ist. Dabei sind Systeme denkbar, bei denen der Funktionsrahmen FR insgesamt als autonome Einheit weitgehend ohne Bedienperson betätigt wird.

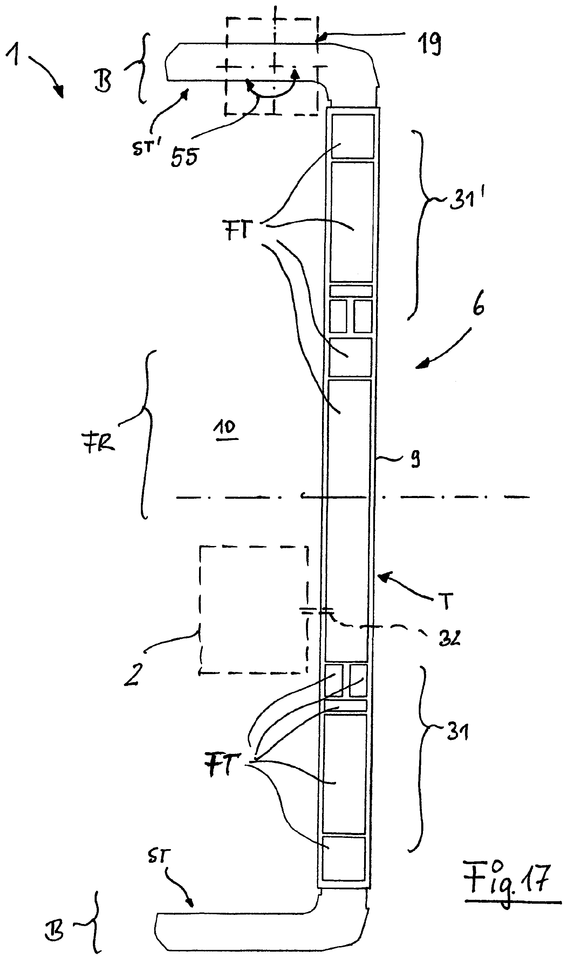

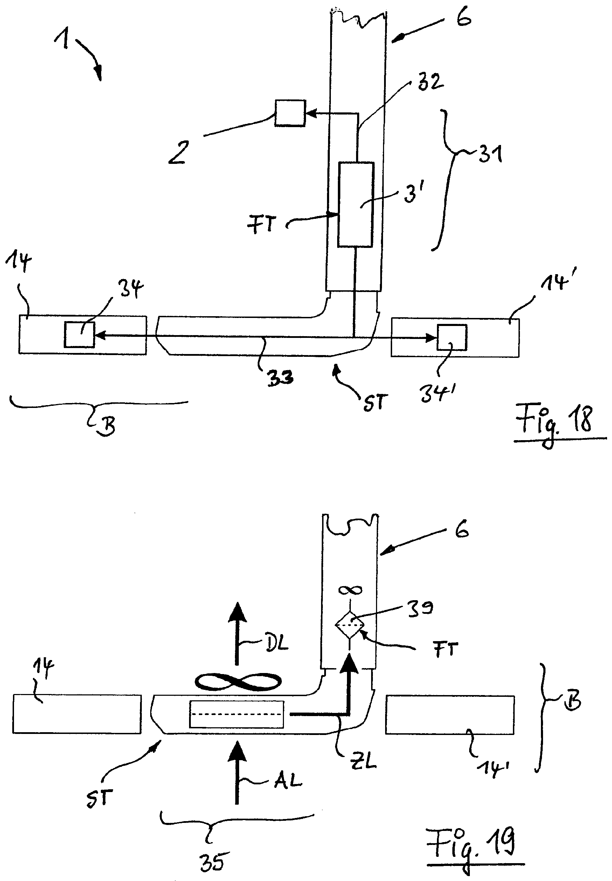

Die konstruktive Umsetzung des Gesamtkonzepts gemäß Fig. 2 führt zu einer integrierten Bauweise im Bereich des Basisträgers 6, wie dies beispielhaft in Fig. 17 dargestellt ist. Dabei wird deutlich, dass im Bereich des Basisträgers 6 vorzugsweise eine "doppelte" Energieversorgung mit zwei im Wesentlichen symmetrischen Einheiten 31,31' vorgesehen ist. Aus der Detaildarstellung gemäß Fig. 18 wird deutlich, dass die Energieversorgungseinheit 31 mit einem Antriebsaggregat 3' versehen ist, das über einen Antriebsstrang 32 zu dem zumindest einen Anbaugerät 2 geführt ist. Andererseits ist das Antriebsaggregat 3' so ausführbar, dass mittels der Verbindung 33 ein jeweiliger Fahrantrieb 34, 34' im Bereich der Fahrraupen 14, 14' aktivierbar ist.

Aus einer weiteren Detaildarstellung gemäß Fig. 19 wird deutlich, dass das vorbeschriebene Antriebskonzept auch mit einem Kühler-Lüfter-System 35 verbunden werden kann. Dieses insbesondere in den Bereich der Seitenträger ST, ST' integrierte Kühler-Lüfter-System 35 ist bezüglich des Arbeitsraumes des Systems so angeordnet, dass vergleichsweise saubere Ansaugluft AL in das System angesaugt werden kann. Mit dieser Ansaugluft AL kann neben der Kühlung von Antriebsaggregaten die Verschmutzung weiterer Baugruppen effektiv vermieden werden. Dabei sind variable Umlenkungen der Druckluft DL zum Bereich der Anbaugeräte 2 hin vorgesehen. Das Konzept des weitgehend geschlossenen Basisträgers 6 kann dabei auch mit Zusatzleitungen ZL versehen sein, so dass im Innenraum des Basisträgers 6 weitere Teilluftströme nutzbar sind.

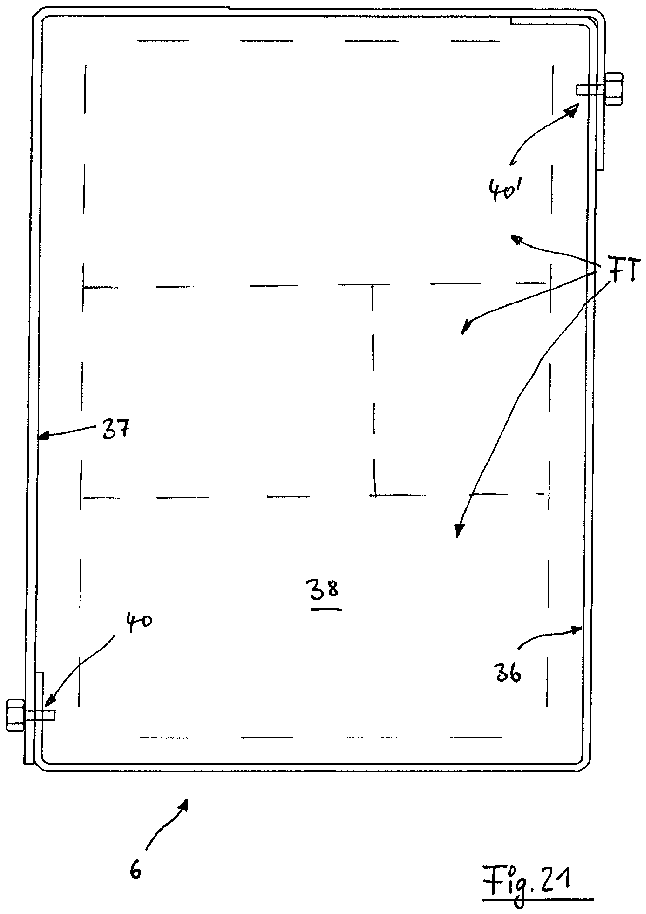

In Fig. 21 zeigt eine Prinzipdarstellung den Querschnittsaufbau des Basisträgers 6, wobei dieser einen zumindest bereichsweise von Konturplatten 36, 37 umgriffenen und Funktionsteile FT (Fig. 17) des Systems aufnehmenden Innenraum 38 definiert.

Wie bereits in Zusammenschau mit Fig. 19 erörtert, kann in diesem Innenraum 38 mittels des Kühler-Lüfter-Systems 35 ein Überdruck erzeugt werden, wobei auch zusätzliche Luftführungen 39 denkbar sind. Der Innenraum 38 ist dabei so definiert, dass aus diesem heraus der Antriebsstrang 32 für das zumindest eine Anbaugerät 2 herausgeführt werden kann.

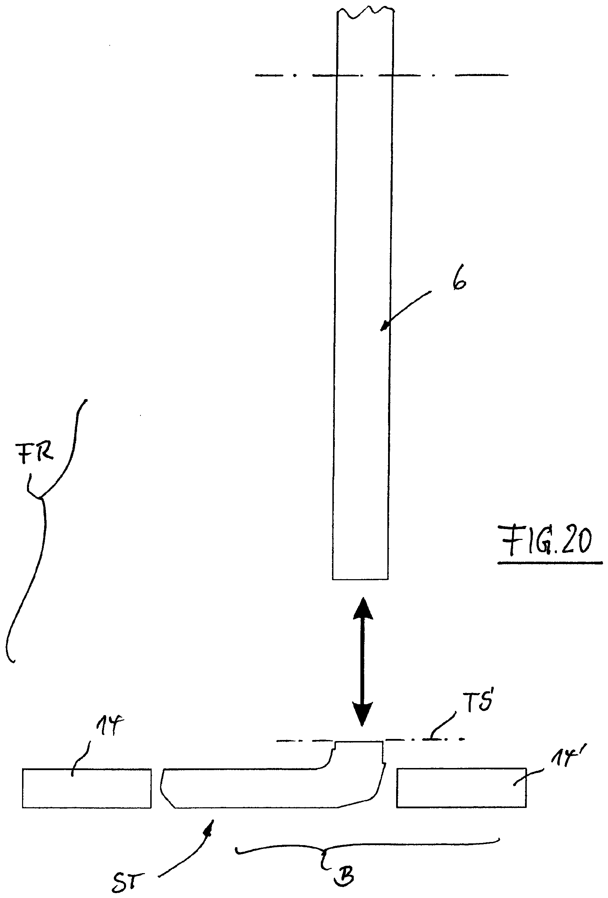

Dabei ist der Funktionsrahmen FR sowohl in den Details gemäß Fig. 21 als auch den einzelnen Baugruppen als modulare Einheit ausgebildet. Die Konturplatten 36, 37 sind über lösbare Verbindungen 40, 40' so konzipiert, dass im Bedarfsfall Montageöffnungen für die innen liegenden Aggregate problemlos freigebbar sind. In Fig. 20 ist der modulare Aufbau im Bereich der Seitenträger ST dargestellt, wobei deutlich wird, dass der Basisträger 6 im Bereich einer Teilungsebene TS von weiteren Baugruppen trennbar ist und damit eine für Transportzwecke optimale Teilung erreichbar ist.

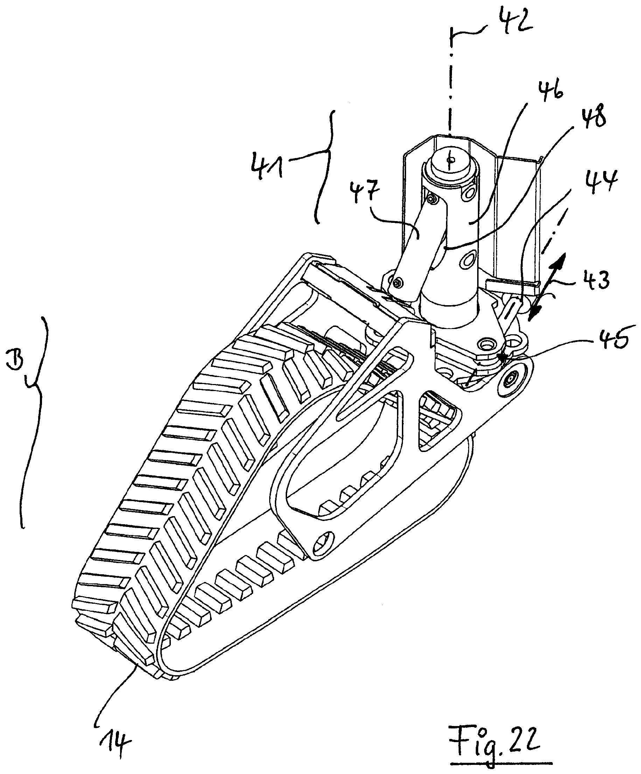

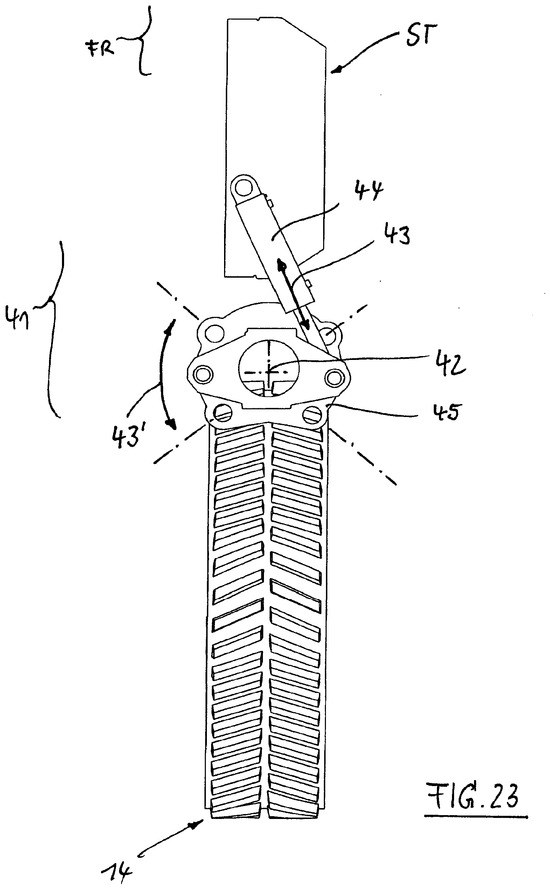

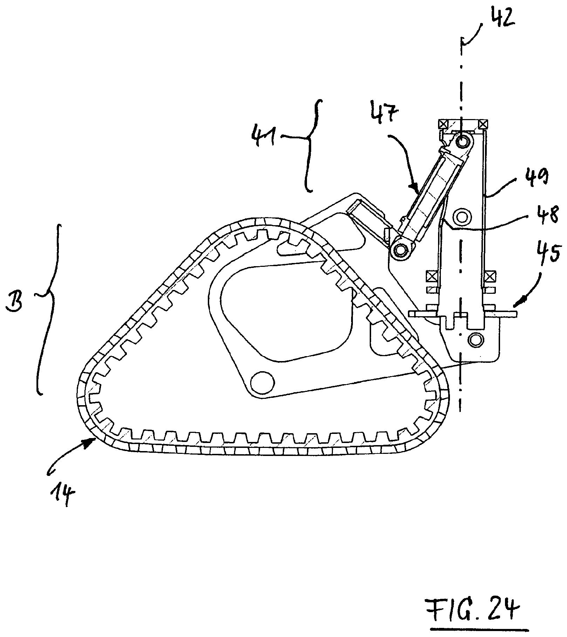

Aus den Darstellungen gemäß Fig. 22 bis Fig. 26 ergeben sich konstruktive Gestaltungen im Bereich der jeweiligen Bodenabstützungen B, B'. Dabei wird deutlich, dass die Stützkonstruktion 41 eine vertikale Hochachse 42 definiert, um die die Fahrraupe 14 so schwenkbar ist, dass die vorbeschriebenen unterschiedlichen Nutzungs- bzw. Fahrpositionen erreicht werden können. Durch eine entsprechende Hubbewegung in Pfeilrichtung 43 kann mittels eines Lenkzylinders 44 eine Stellbewegung im Bereich einer Lenkscheibe 45 so realisiert werden, dass entsprechende Rastelemente eine Fixierung in der vorgesehenen Position ermöglichen. Zusätzlich zu diesem Einstellsystem ist im Bereich der vertikalen Hochachse 42 eine Lenkwelle 46 vorgesehen, die mit einem Hubzylinder 47 zusammenwirkt, der im Bereich einer Durchgriffsöffnung 48 in die Lenkwelle hineingeführt ist. Mit diesem Stützsystem sind insbesondere hohe Fahr- und Druckbelastungen im Bereich der Bodenabstützungen B, B' aufnehmbar. In Fig. 24 ist das vorbeschriebene System mit den Teilen im Bereich der Lenkscheibe 45 und des Hubzylinders im Bereich der Lenkwelle nochmals in einer Querschnittsdarstellung veranschaulicht.

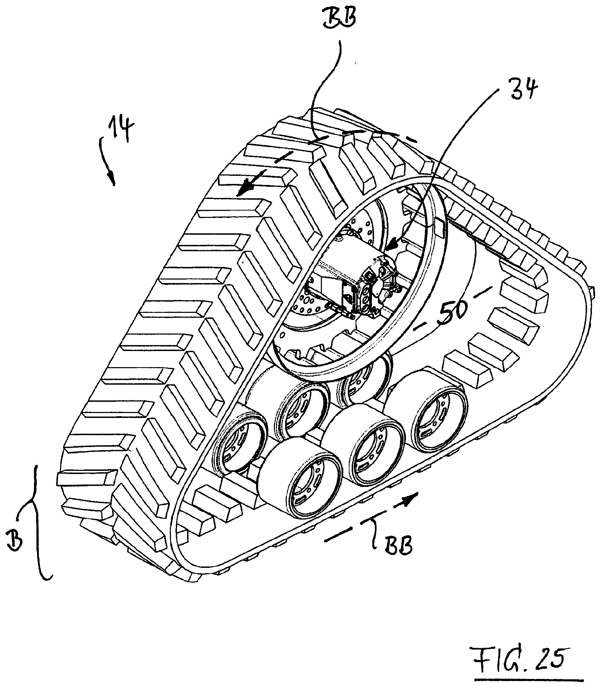

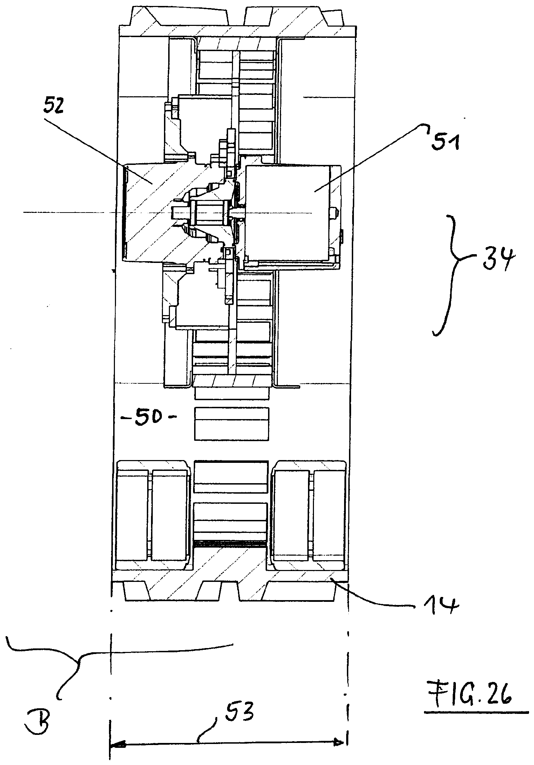

Aus den Darstellungen in Fig. 25 und 26 wird der Detailaufbau im Bereich des Antriebs 34 deutlich. Die in Fig. 25 perspektivisch dargestellte Fahrraupe 14 definiert dabei einen von deren Bewegungsbahn BB definierten Stützraum 50, in dem als Antrieb 34 ein E-Motor 51 mit Planetengetriebe 52 vorgesehen ist. Aus Fig. 26 wird dabei deutlich, dass diese Baugruppe im Bereich des Antriebs 34 überstandsfrei unter der Breite 53 der Fahrraupe 14 verläuft.

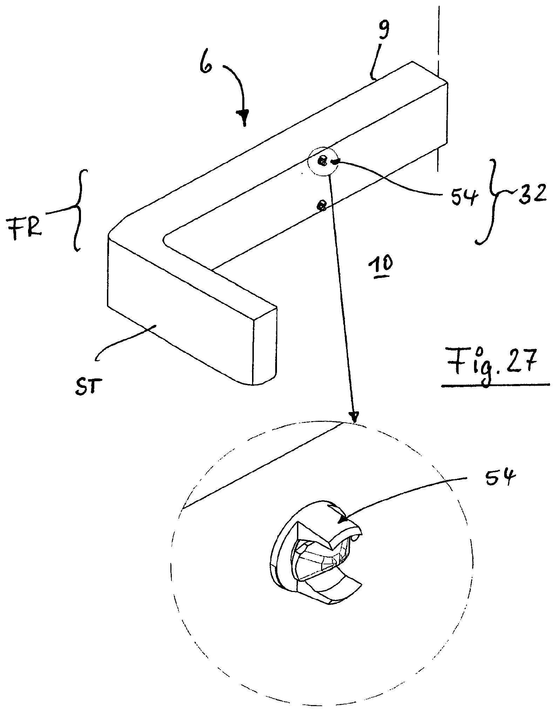

In Fig. 27 ist ein weiteres Detail im Verbindungsbereich 32 für das Anbaugerät 2 dargestellt. Dabei ist vorgesehen, dass der Basisträger 6 im Bereich jeweiliger Twistlock-Verbinder 54 für eine weitgehend automatische Kopplung von Anbaugeräten 2 ausgebildet ist. Eine weitere vorteilhafte Ausgestaltung des Systems sieht vor, dass das Fahrerhaus 19 (Fig. 17) im Bereich seiner Stützverbindung zum Funktionsrahmen FR hin eine Schwenkung gemäß Pfeil 55 ermöglicht.

## Patentansprüche

1. Selbstfahrende Arbeitsmaschine für die Landwirtschaft, mit einer jeweilige Anbaugeräte (2) aufnehmenden, zumindest ein Antriebsaggregat (3) mit Steuerungsbaugruppe (4) aufweisenden und mittels endseitiger Bodenabstützungen (B, B') beweglichen Tragstruktur (T), die für variierbare Arbeitsaufgaben ein mit zumindest einem Basisträger (6) versehenes landwirtschaftliches Gantrie-System bildet, das ausgehend von einer eine Fahrbreite (Maß FB) definierenden Straßenausrichtung in eine eine wesentlich größere Arbeitsbreite (AB) aufweisende Arbeitsausrichtung umrüstbar ist, wobei die Tragstruktur (T) mit jeweiligen die Bodenabstützungen (B, B') aufweisenden Seitenträgern (ST, ST') versehen ist, **dadurch gekennzeichnet, dass** die in Straßenausrichtung eine Längsausrichtung definierende Tragstruktur im Bereich ihrer beiden endseitigen Bodenabstützungen (B, B') eine sich zwischen diesen erstreckende vertikale Längsmittelebene (M) aufweist und in räumlicher Ausrichtung zu dieser ein Funktionsrahmen (FR, FR') mit asymmetrischem Basisträger (6') als Tragstruktur gebildet ist, derart, dass der Basisträger (6) ausgehend von einem Längenmaß (FB) möglicher Fahrbreite(n) ausschließlich in einem jeweiligen äußeren Teilungsdrittel (TD, TD') dieses Längenmaßes (FB) mit dem zumindest einen Seitenträger (ST, ST') verbunden ist.

2. Selbstfahrende Arbeitsmaschine nach Anspruch 1, **dadurch gekennzeichnet, dass** in Straßenausrichtung des Funktionsrahmens (FR, FR') dessen im Wesentlichen parallel zur Fahrtrichtung (FS) verlaufender asymmetrischer Basisträger (6') eine seitliche Begrenzungsfläche (9) für eine einzuhaltende, maximal zulässige Fahrbreite (FB) definiert.

3. Selbstfahrende Arbeitsmaschine nach Anspruch 1 oder 2, **dadurch gekennzeichnet, dass** die Tragstruktur mit asymmetrischem Basisträger (6') zumindest einen zentralen Aufnahmeraum (10) ausbildet.

4. Selbstfahrende Arbeitsmaschine nach einem der Ansprüche 1 bis 3, **dadurch gekennzeichnet, dass** der Funktionsrahmen (FR') eine in Draufsicht im Wesentlichen L-förmige Tragstruktur (T) mit nur einem der Seitenträger (ST, ST') aufweist.

5. Selbstfahrende Arbeitsmaschine nach einem der Ansprüche 1 bis 3, **dadurch gekennzeichnet, dass** der Funktionsrahmen (FR) an seinem Basisträger (6') mit mehreren als Seitenträger (ST, ST') nutzbaren Baugruppen versehen ist, derart, dass ein in Draufsicht im Wesentlichen E- oder U-förmiger Funktionsrahmen (FR) gebildet ist.

6. Selbstfahrende Arbeitsmaschine nach einem der Ansprüche 1 bis 5, **dadurch gekennzeichnet, dass** an den beiden Endbereichen des Basisträgers (6') jeweils nur einer der Seitenträger (ST, ST') vorgesehen ist und damit ein von drei Trägern zumindest bereichsweise umgrenzter Aufnahmeraum (10) definierbar ist.

7. Selbstfahrende Arbeitsmaschine nach einem der Ansprüche 1 bis 6, **dadurch gekennzeichnet, dass** mit variablen Längen des Basisträgers (6') und variablen Längenmaßen der/des Seitenträger(s) (ST, ST') eine zumindest bereichsweise zweiseitig umfasste Grundfläche definiert wird und mit dieser das Volumen zumindest des zentralen Aufnahmeraumes (10) des Funktionsrahmens (FR) variabel gestaltbar ist.

8. Selbstfahrende Arbeitsmaschine nach Anspruch 7, **dadurch gekennzeichnet, dass** im Bereich des Funktionsrahmens (FR) mehrere, im Höhenmaß (13) variabel zu bemessende Aufnahmeräume (10) vorgesehen sind.

9. Selbstfahrende Arbeitsmaschine nach einem der Ansprüche 1 bis 8, **dadurch gekennzeichnet, dass** der Funktionsrahmen (FR) zumindest im Bereich des zentralen Aufnahmeraumes (10) zumindest drei Funktionsabschnitte zur Kopplung von Anbaugeräten (2) in einer Ebene aufweist, derart, dass mit dem Basisträger (6') und/oder den jeweiligen Seitenträgern (ST, ST') jeweils zumindest eine Anbauposition für zumindest eines der landwirtschaftlichen Anbaugeräte (2) vorgebbar ist.

10. Selbstfahrende Arbeitsmaschine nach einem der Ansprüche 1 bis 9, **dadurch gekennzeichnet, dass** der Basisträger (6') und/oder die Seitenträger (ST, ST') in ihrer horizontalen Lage und/oder ihrer vertikalen Höhe (13) oberhalb einer Straßen- oder Feldarbeitsfläche (5) einstellbar ist/sind.

11. Selbstfahrende Arbeitsmaschine nach einem der Ansprüche 1 bis 10, **dadurch gekennzeichnet, dass** die insbesondere mit Stützrädern, Bandlaufwerken o. dgl. versehenen Bodenabstützungen (B, B') verstellbar mit dem Funktionsrahmen (FR) verbunden sind.

12. Selbstfahrende Arbeitsmaschine nach einem der Ansprüche 1 bis 11, **dadurch gekennzeichnet, dass** an den jeweiligen Seitenträgern (ST, ST') jeweils zumindest eine Bodenabstützung (B, B') vorgesehen ist und diese mit einer jeweiligen Schwenkkonstruktion (16, 16') versehen sind, derart, dass in zumindest einer Bedienstellung der Bodenabstützung(en) (B, B') ein zusätzlicher Freiraum (Ebene 18) als Zugang zumindest in den zentralen Aufnahmeraum (10) herstellbar ist.

13. Selbstfahrende Arbeitsmaschine nach Anspruch 11 oder 12, **dadurch gekennzeichnet, dass** an jedem der Seitenträger (ST, ST') zwei paarweise zusammenwirkende Stützräder oder Bandlaufwerke (14, 15, 14', 15') als die jeweils verlagerbare Bodenabstützung (B, B') vorgesehen sind.

14. Selbstfahrende Arbeitsmaschine nach einem der Ansprüche 1 bis 13, **dadurch gekennzeichnet, dass** im Bereich des Funktionsrahmens (FR) zumindest einer der Seitenträger (ST, ST') in Relation zum Basisträger (6') verlagerbar mit diesem verbunden ist.

15. Selbstfahrende Arbeitsmaschine nach einem der Ansprüche 1 bis 14, **dadurch gekennzeichnet, dass** der Funktionsrahmen (FR) im Bereich des Basisträgers (6') und/oder zumindest eines der Seitenträger (ST, ST') teleskopisch ausgebildet ist/sind.

## Claims

1. Self-propelled machine for agriculture, with a support structure (T) receiving respective attachment devices (2), and comprising at least one drive unit (3) with a control assembly (4) and movable by means of ground supports (B, B') at the end side, which forms an agricultural gantry system provided with at least one base carrier (6) for variable work tasks, which can be converted from a road orientation defining a driving width (dimension FB) to a working orientation having a substantially larger working width (AB), wherein the support structure (T) is provided with respective side carriers (ST, ST') comprising the ground supports (B, B'), **characterised in that** the support structure defining a longitudinal orientation in the road orientation has in the region of its two end-side ground supports (B, B') a vertical longitudinal centre plane (M) extending therebetween, and spatially oriented thereto, a functional frame (FR, FR') with an asymmetrical base carrier (6') is formed as the support structure, in such manner that the base carrier (6) starting from a longitudinal dimension (FB) of possible travel width(s) exclusively in a respective outer division third (TD, TD') of this longitudinal dimension (FB) is connected to the at least one side carrier (ST, ST').

2. Self-propelled machine according to claim 1, **characterised in that** in the road orientation of the functional frame (FR, FR') its asymmetrical base carrier (6') running substantially parallel to the direction of travel (FS) defines a lateral boundary surface (9) for a maximum permissible travel width (FB) to be maintained.

3. Self-propelled machine according to claim 1 or 2, **characterised in that** the support structure with asymmetrical base carrier (6') forms at least one central receiving space (10).

4. Self-propelled machine according to any one of claims 1 to 3, **characterised in that** the functional frame (FR') has a substantially L-shaped support structure (T) in top view with only one of the side carriers (ST, ST').

5. Self-propelled machine according to any one of claims 1 to 3, **characterised in that** the functional frame (FR) is provided on its base carrier (6') with a plurality of assemblies usable as side supports (ST, ST'), such that a substantially E- or U-shaped functional frame (FR) in top view is formed.

6. Self-propelled machine according to any one of claims 1 to 5, **characterised in that** in each case only one of the side supports (ST, ST') is provided at the two end regions of the base carrier (6') and a receiving space (10) delimited at least in regions by three supports is definable.

7. Self-propelled machine according to any one of claims 1 to 6, **characterised in that** with variable lengths of the base carrier (6') and variable length dimensions of the side support(s) (ST, ST') a base area included at least partially on two sides is defined and with this the volume of at least the central receiving space (10) of the functional frame (FR) can be variably configured.

8. Self-propelled machine according to claim 7, **characterised in that** a plurality of receiving spaces (10) are provided in the region of the functional frame (FR), which can be variably dimensioned in height (13).

9. Self-propelled machine according to any one of claims 1 to 8, **characterised in that** the functional frame (FR) at least in the region of the central receiving space (10) comprises at least three functional sections for coupling attachment devices (2) in one plane, in such manner that with the base carrier (6') and/or the respective side supports (ST, ST') in each case at least one attachment position can be specified for at least one of the agricultural attachment devices (2).

10. Self-propelled machine according to any one of claims 1 to 9, **characterised in that** the base carrier (6') and/or the side supports (ST, ST') is/are adjustable in their horizontal position and/or their vertical height (13) above a road surface or field work surface (5).

11. Self-propelled machine according to any one of claims 1 to 10, **characterised in that** the ground supports (B, B') provided in particular with support wheels, belt drives or similar, are adjustably connected to the functional frame (FR).

12. Self-propelled machine according to any one of claims 1 to 11, **characterised in that** in each case at least one ground support (B, B') is provided on the respective side supports (ST, ST') and these are provided with a respective pivoting construction (16, 16'), in such manner that in at least one operating position of the ground support(s) (B, B') an additional free space (level 18) can be produced as access at least to the central receiving space (10).

13. Self-propelled machine according to claim 11 or 12, **characterised in that** on each of the side supports (ST, ST') two support wheels or belt drives (14, 15, 14', 15') cooperating in pairs are provided as the respectively displaceable ground support (B, B').

14. Self-propelled machine according to any one of claims 1 to 13, **characterised in that** in the region of the functional frame (FR) at least one of the side supports (ST, ST') is displaceably connected to the base carrier (6') in relation thereto.

15. Self-propelled machine according to any one of claims 1 to 14, **characterised in that** the functional frame (FR) in the region of the base carrier (6') and/or at least one of the side supports (ST, ST') is designed telescopically.

## Revendications

1. Engin de travail automoteur pour l'agriculture, avec une structure porteuse (T) recevant des équipements auxiliaires (2) respectifs, présentant au moins un groupe d'entraînement (3) avec un groupe de commande (4) et mobile au moyen de béquilles (B, B') d'extrémité, qui forme pour des tâches variables un système de portique agricole pourvu d'au moins un support de base (6), qui est adaptable d'une orientation de route définissant une largeur de roulement (mesure FB) dans une orientation de travail présentent une largeur de travail (AB) sensiblement plus grande, dans lequel la structure porteuse (T) est pourvue de supports latéraux (ST, ST') respectifs présentant les béquilles (B, B'), **caractérisé en ce que** la structure porteuse définissant une orientation longitudinale dans l'orientation de route présente dans la zone de ses deux béquilles (B, B') d'extrémité un plan médian longitudinal (M) vertical s'étendant entre celles-ci et un cadre fonctionnel (FR, FR') avec un support de base (6') asymétrique est formé en tant que structure porteuse dans l'orientation spatiale par rapport à celui-ci, de telle sorte que le support de base (6) est relié à le au moins un support latéral (ST, ST') en partant d'une mesure de longueur (FB) d'une (de) largeur(s) de roulement possible(s) exclusivement dans un tiers de partage (TD, TD') extérieur respectif de cette mesure de longueur (FB).

2. Engin de travail automoteur selon la revendication 1, **caractérisé en ce que** dans l'orientation de route du cadre fonctionnel (FR, FR') le support de base (6') asymétrique de celui-ci s'étendant sensiblement parallèlement au sens de marche (FS) définit une surface de délimitation latérale (9) pour une largeur de roulement (FB) maximale admissible à maintenir.

3. Engin de travail automoteur selon la revendication 1 ou 2, **caractérisé en ce que** la structure porteuse avec le support de base (6') asymétrique réalise au moins un espace de réception (10) central.

4. Engin de travail automoteur selon l'une quelconque des revendications 1 à 3, **caractérisé en ce que** le cadre fonctionnel (FR') présente une structure porteuse (T) sensiblement en forme de L en vue en élévation avec un seul des supports latéraux (ST, ST').

5. Engin de travail automoteur selon l'une quelconque des revendications 1 à 3, **caractérisé en ce que** le cadre fonctionnel (FR) est pourvu sur son support de base (6') de plusieurs groupes pouvant être utilisés comme supports latéraux (ST, ST'), de telle sorte qu'un cadre fonctionnel (FR) sensiblement en forme de E ou de U en vue en élévation est formé.

6. Engin de travail automoteur selon l'une quelconque des revendications 1 à 5, **caractérisé en ce que** respectivement un seul des supports latéraux (ST, ST') est prévu sur les deux zones d'extrémité du support de base (6') et ainsi un espace de réception (10) délimité au moins par endroits par trois supports peut être défini.

7. Engin de travail automoteur selon l'une quelconque des revendications 1 à 6, **caractérisé en ce qu'**une surface de base comprise des deux côtés au moins par endroits est définie avec des longueurs variables du support de base (6') et des mesures de longueur variables des/du support de base(s) (ST, ST') et le volume au moins de l'espace de réception (10) central du cadre fonctionnel (FR) peut être configuré de manière variable avec celle-ci.

8. Engin de travail automoteur selon la revendication 7, **caractérisé en ce que** plusieurs espaces de réception (10) à dimensionner de manière variable en hauteur (13) sont prévus dans la zone du cadre fonctionnel (FR).

9. Engin de travail automoteur selon l'une quelconque des revendications 1 à 8, **caractérisé en ce que** le cadre fonctionnel (FR) présente au moins dans la zone de l'espace de réception (10) central au moins trois parties fonctionnelles pour l'accouplement d'équipements auxiliaires (2) dans un plan, de telle sorte que respectivement au moins une position auxiliaire pour au moins un des équipements auxiliaires (2) agricoles peut être prédéfinie avec le support de base (6') et/ou les supports latéraux (ST, ST') respectifs.

10. Engin de travail automoteur selon l'une quelconque des revendications 1 à 9, **caractérisé en ce que** le support de base (6') et/ou les supports latéraux (ST, ST') est/sont réglable(s) dans leur position horizontale et/ou leur hauteur verticale (13) au-dessus d'une surface de travail de route ou de champ (5).

11. Engin de travail automoteur selon l'une quelconque des revendications 1 à 10, **caractérisé en ce que** les béquilles (B, B') pourvues en particulier de roues d'appui, trains de roulement à bande ou similaires sont reliées de manière déplaçable au cadre fonctionnel (FR).

12. Engin de travail automoteur selon l'une quelconque des revendications 1 à 11, **caractérisé en ce que** respectivement au moins une béquille (B, B') est prévue sur les supports latéraux (ST, ST') respectifs et celles-ci sont pourvues d'une construction pivotante (16, 16') respective, de telle sorte que dans au moins une position de commande utilisateur de la (des) béquille(s) (B, B') un espace libre additionnel (plan 18) en tant qu'accès peut être produit au moins dans l'espace de réception (10) central.

13. Engin de travail automoteur selon la revendication 11 ou 12, **caractérisé en ce que** deux roues d'appui ou trains de roulement à bande (14, 15, 14', 15') coopérant par paires sont prévus en tant que béquille (B, B') respectivement déplaçable sur chacun des supports latéraux (ST, ST').

14. Engin de travail automoteur selon l'une quelconque des revendications 1 à 13, **caractérisé en ce que** dans la zone du cadre fonctionnel (FR) au moins un des supports latéraux (ST, ST') est relié de manière déplaçable par rapport au support de base (6') à celui-ci.

15. Engin de travail automoteur selon l'une quelconque des revendications 1 à 14, **caractérisé en ce que** le cadre fonctionnel (FR) dans la zone du support de base (6') et/ou au moins un des supports latéraux (ST, ST') est/sont réalisés de manière télescopique.
